# EUROPEAN PATENT SPECIFICATION

(11) **EP 3 278 510 B1**
(45) Date of publication and mention of the grant of the patent: **15.01.2020**
(21) Application number: 16773493.8
(22) Date of filing: 01.04.2016
(51) Int. Cl.: H04W 4/02, H04W 72/02, H04W 84/00, H04W 76/14

(54) **METHODS AND APPARATUS FOR RESOURCE POOL DESIGN FOR VEHICULAR COMMUNICATIONS**
VERFAHREN UND VORRICHTUNG FÜR RESSOURCENPOOL-ENTWURF FÜR FAHRZEUGKOMMUNIKATION
PROCÉDÉS ET APPAREIL POUR UNE CONCEPTION DE GROUPE DE RESSOURCES POUR DES COMMUNICATIONS DE VÉHICULE

(30) Priority: 02.04.2015 US 201562142151 P; 02.10.2015 US 201562236473 P; 05.11.2015 US 201562251256 P; 18.11.2015 US 201562256993 P; 04.02.2016 US 201662291323 P; 04.02.2016 US 201662291253 P; 26.02.2016 US 201662300425 P; 26.02.2016 US 201662300465 P; 24.03.2016 US 201615080485
(43) Date of publication of application: 07.02.2018
(73) Proprietor: Samsung Electronics Co., Ltd., Gyeonggi-do 16677 (KR)
(72) Inventor: NOVLAN, Thomas David, Mountain View, CA 94043 (US); RAJAGOPAL, Sridhar, Mountain View, CA 94043 (US)
(74) Representative: Nederlandsch Octrooibureau
(86) International application number: PCT/KR2016/003397
(87) International publication number: WO 2016/159712

(56) References cited:
- WO-A1-2015/021185
- WO-A1-2015/032436
- US-A1- 2011 136 502
- HUAWEI ET AL: "Motivation for RAN work on V2V in Rel-13", 3GPP DRAFT; RP-141918 MOTIVATION FOR RAN WORK ON V2V IN REL-13, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Maui, USA; 20141208 - 20141211 2 December 2014 (2014-12-02), XP050898625, Retrieved from the Internet: URL:http://www.3gpp.org/ftp/Meetings_3GPP_ SYNC/RAN/Docs/ [retrieved on 2014-12-02]
- LG ELECTRONICS INC.: 'V2V Use cases for Road Safety services' S 1-150058 , 3GPP TSG-SA WG1 MEETING #69 23 January 2015, SANYA, P.R. CHINA, XP050940691
- HUAWEI ET AL.: 'Motivation for RAN work on V2V in Rel-13' RP-141918, 3GPP TSG RAN MEETING #66 02 December 2014, MAUI, USA, XP050898625
- KDDI: 'Views on discovery resource allocation' R1-140581, 3GPP TSG RAN WG1 MEETING #76 31 January 2014, PRAGUE, CZECH, XP050736108
- ASUSTEK: 'On the Use of Type 2B Discovery' R1-140292, 3GPP TSG RAN WG1 MEETING #76 01 February 2014, PRAGUE, CZECH REPUBLIC, XP050735842

## Description

### Technical Field

This disclosure relates generally to wireless communication systems. More specifically, this disclosure relates to method and apparatus for resource pool designs to support vehicle communications and a discovery protocol.

### Background Art

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

Traditionally, cellular communication networks have been designed to establish wireless communication links between mobile devices and fixed communication infrastructure components (such as base stations or access points) that serve users in a wide or local geographic range. However, a wireless network can also be implemented to utilize only device-to-device (D2D) communication links without a need for fixed infrastructure components. This type of network is typically referred to as an "ad-hoc" network. A hybrid communication network can support devices that connect both to fixed infrastructure components and to other D2D-enabled devices. While end user devices such as smartphones may be envisioned for D2D communication networks, a vehicular communication network (such as V2X) may be supported by a communication protocol where vehicles exchange control and data information between other vehicles or other infrastructure and end-user devices. Multiple types of communication links may be supported by nodes providing V2X communication in a network, and utilizing the same or different protocols and systems.

XP50898625 (HUAWEI: "Motivation for RAN work on V2V in Rel-13", 2014-12-02) discloses a method for V2V resource management based on D2D resource management.

WO 2015/032436 A1 discloses a method for cluster-based resource allocation for V2V communication.

WO 2015/021185 A1 discloses a method for scheduling resources for D2D communication based on characteristics of the data to be transmitted.

### Disclosure of Invention

### Solution to Problem

This disclosure provides a method and apparatus for resource pool design to support vehicle communications and a discovery protocol.

The invention is specified by the independent claims. Further embodiments are specified in the dependent claims.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

### Brief Description of Drawings

For a more complete understanding of this disclosure and its advantages, reference is now made to the following description, taken in conjunction with the accompanying drawings, in which:
FIG. 1 illustrates an example wireless network according to embodiments of the present disclosure;
FIG. 2 illustrates an example base station (BS) according to embodiments of the present disclosure;
FIG. 3 illustrates an example user equipment (UE) according to embodiments of the present disclosure;
FIG. 4 illustrates an example long-term evolution vehicle (LTE V2X) communication network according to embodiments of the present disclosure;
FIG. 5 illustrates an example different scheduling assignment (SA) offset and device-to-device (D2D) data periodicity according to embodiments of the present disclosure;
FIG. 6 illustrates an example SA and data resource allocation according to embodiments of the present disclosure;
FIG. 7 illustrates an example vehicle-to-vehicle (V2V) communication network according to embodiments of the present disclosure;
FIG. 8 illustrates an example SA and data resource allocation for V2V and D2D traffic according to embodiments of the present disclosure;
FIG. 9 illustrates an example control and data transmission for V2 communication according to embodiments of the present disclosure;
FIG. 10 illustrates an example configuration of V2V discovery period according to embodiments of the present disclosure;
FIG. 11 illustrates an example configuration of multiple frequency division multiplexing/time division multiplexing (FDM/TDM) resource pools according to embodiments of the present disclosure;
FIG. 12 illustrates an example multiple traffic types of FDM according to embodiments of the present disclosure;
FIG. 13 illustrates an example multiple traffic types of frequency-distributed SA and data pools according to embodiments of the present disclosure;
FIG. 14 illustrates an example sidelink (SL) interface according to embodiments of the present disclosure;
FIG. 15 illustrates an example resource pool for a physical sidelink control channel (PSCCH) according to embodiments of the present disclosure;
FIG. 16 illustrates an example subframe resource allocation according to embodiments of the present disclosure;
FIG. 17 illustrates an example resource pool using an FDM of SA and data according to embodiments of the present disclosure;
FIG. 18 illustrates an example resource pool using an FDM of SA and data on separate physical channels according to embodiments of the present disclosure;
FIG. 19 illustrates an example resource pool using an FDM of SA and data on separate physical channels with a single discrete fourier transform (DFT) precoding according to embodiments of the present disclosure;
FIG. 20 illustrate an example resource pool using a TDM of SA and data on separate physical channels within the same subframe according to embodiments of the present disclosure;
FIG. 21 illustrates an example resource pool for periodic and aperiodic traffics, and mode 1 and mode 2 allocations according to embodiments of the present disclosure;
FIG. 22 illustrates an example resource pool for periodic and aperiodic traffics allocation with partitioning information according to embodiments of the present disclosure;
FIG. 23 illustrates an example mode 1 and mode 2 sharing the same resource pool according to embodiments of the present disclosure;
FIG. 24 illustrates an example semi-persistent scheduling (SPS) using an FDM of SA and data on separate physical channels within the same subframe according to embodiments of the present disclosure;
FIG. 25 illustrates an example SA retransmission with data for a semi-persistent transmission according to embodiments of the present disclosure; and
FIG. 26 illustrates an example signaling flow for a vehicle-to-everything (V2X) communication according to embodiments of the present disclosure.

### Best Mode for Carrying out the Invention

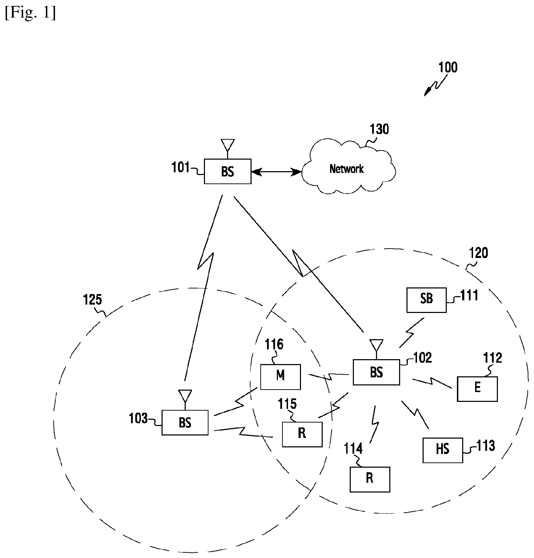

FIGs.1 through 26, discussed below, and the various embodiments used to describe the principles of this disclosure in this patent document are by way of illustration only and should not be construed in any way to limit the scope of the disclosure. Those skilled in the art will understand that the principles of this disclosure may be implemented in any suitably arranged wireless communication system.

The following documents and standards descriptions are related to the technical field: 3GPP TS 36.211 v13.0, "E-UTRA, Physical channels and modulation" (REF 1); 3GPP TS 36.212 v13.0, "E-UTRA, Multiplexing and Channel coding" (REF 2); 3GPP TS 36.213 v13.0, "E-UTRA, Physical Layer Procedures" (REF 3); 3GPP TS 36.872 v12.0.0, "Small cell enhancements for E-UTRA and E-UTRAN ? Physical layer aspects"(REF 4); and 3GPP TS 36.133 v11.7.0, "E-UTRA, Requirements for support of radio resource management" (REF 5); 3GPP TS 36.321 v12.4.0, "E-UTRA, Medium Access Control (MAC) protocol specification (REF 6); 3GPP TS36.331 v12.4.0, "E-UTRA, Radio Resource Control (RRC) protocol specification (REF 7); 3GPP TS 23.303, "v13.2.0, "Proximity-based services (ProSe); stage 2 (REF 8); 3GPP TR 22.885 v14.0.0, "Study on LTE support for V2X services (REF 9)"

The descriptions of FIGs. 1-3 are not meant to imply physical or architectural limitations to the manner in which different embodiments may be implemented. Different embodiments of the present disclosure may be implemented in any suitably-arranged communications system.

FIG. 1 illustrates an example wireless network 100 according to embodiments of the present disclosure. The embodiment of the wireless network 100 shown in FIG. 1 is for illustration only. Other embodiments of the wireless network 100 could be used without departing from the scope of this disclosure.

As shown in FIG. 1, the wireless network 100 includes a BS 101, a BS 102, and a BS 103. The BS 101 communicates with the BS 102 and the BS 103. The BS 101 also communicates with at least one network 130, such as the Internet, a proprietary Internet Protocol (IP) network, or other data network.

The BS 102 provides wireless broadband access to the network 130 for a first plurality of UEs within a coverage area 120 of the BS 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The BS 103 provides wireless broadband access to the network 130 for a second plurality of UEs within a coverage area 125 of the BS 103. The second plurality of UEs includes the UE 115 and the UE 116. In some embodiments, one or more of the BSs 101-103 may communicate with each other and with the UEs 111-116 using 5G, LTE, LTE-A, WiMAX, WiFi, LTE-U(LAA), device-to device (D2D), vehicle communication (V2X) such as vehicle-to-device (V2D), vehicle-to-infrastructure (V2I), vehicle-to-vehicle (V2V), or other wireless communication techniques. In one embodiment, the BSs 101-103 may be implemented as managing entities that control the UEs 111-116 (such as vehicle terminals).

Depending on the network type, other well-known terms may be used instead of "eNodeB" or "eNB," such as "base station", "managing entity", "managing network entity", or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," "vehicle" or "user device." For the sake of convenience, the terms "user equipment" and "UE" are used in this patent document to refer to remote wireless equipment that wirelessly accesses an eNB (such as base station), whether the UE is a mobile device (such as a vehicle terminal, a mobile telephone, or smartphone) or is normally considered a stationary device (such as a desktop computer, or vending machine).

Dotted lines show the approximate extents of the coverage areas 120 and 125, which are shown as approximately circular for the purposes of illustration and explanation only. It should be clearly understood that the coverage areas associated with BSs, such as the coverage areas 120 and 125, may have other shapes, including irregular shapes, depending upon the configuration of the BSs and variations in the radio environment associated with natural and man-made obstructions.

As described in more detail below, one or more of the UEs 111-116 (such as vehicle with communication interface) include circuitry, programming, or a combination thereof, for processing of discovery and resource selection scheme for V2X communication network. In certain embodiments, and one or more of the BSs 101-103 (such as managing entity) includes circuitry, programming, or a combination thereof, for receiving an authorization request message from a first user equipment (UE) including a request for authorization to perform a vehicle-to-everything (V2X) communication and generating an authorization confirmation message corresponding to the authorization request message to the first UE. The authorization confirmation includes an authorization for the first UE to perform the V2X communication and at least one of security keys, device identifiers (IDs), or group IDs for the first UE to perform the V2X communication.

As used herein, resource selection is a selection of available resources or resource pool(s) comprising time and frequency resources by a node in a wireless communication system. A resource allocation is a type of resource selection that may be performed by a BS (e.g., one of the BSs 101-103) to a first UE (one of the UEs 111-116) that initiates a V2X communication in a wireless communication network with a second UE. For example, UE may perform a resource selection by selecting a portion of the resources that are allocated from the BS to transmit control and data messages including periodic and/or aperiodic traffic to the second UE in a communication range with the first UE. The resource pools may be selected based on one or more resource selection criteria. As used herein, resource selection criteria are any criteria that may be used by a node in a wireless communication system to perform a resource selection. In one example, a UE may select resource pool(s) to use for a V2X communication with another UE using resource selection criteria. For example, without limitation, the resource selection criteria can include geographical location information of the second UE, a size of resource pool, a vehicular (such as the first and/ or second UE) speed, a type of traffic (such as control and data message) including periodic and aperiodic traffic, a transmission type or priority, a device or group ID, etc.

Although FIG. 1 illustrates one example of a wireless network 100, various changes may be made to FIG. 1. For example, the wireless network 100 could include any number of BSs (such as managing entities) and any number of UEs (such as vehicle terminals) in any suitable arrangement. Also, the BS 101 could communicate directly with any number of UEs and provide those UEs with wireless broadband access to the network 130. Similarly, each BS 102-103 could communicate directly with the network 130 and provide UEs with direct wireless broadband access to the network 130. Further, the BSs 101, 102, and/or 103 could provide access to other or additional external networks, such as external telephone networks or other types of data networks.

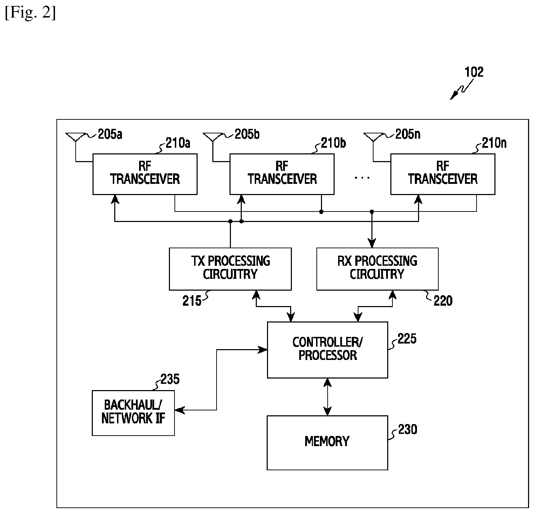

FIG. 2 illustrates an example BS 102 according to embodiments of the present disclosure. The embodiment of the BS 102 illustrated in FIG. 2 is for illustration only, and the BSs 101 and 103 of FIG. 1 could have the same or similar configuration. However, BSs come in a wide variety of configurations, and FIG. 2 does not limit the scope of this disclosure to any particular implementation of a BS. In one embodiment, the BSs may be implemented as managing entities in a V2X communication network.

As shown in FIG. 2, the BS 102 includes multiple antennas 205a-205n, multiple RF transceivers 210a-210n, transmit (TX) processing circuitry 215, and receive (RX) processing circuitry 220. The BS 102 also includes a controller/processor 225, a memory 230, and a backhaul or network interface 235.

The RF transceivers 210a-210n receive, from the antennas 205a-205n, incoming RF signals, such as signals transmitted by UEs in the network 100. In one embodiment, the UEs may be implemented as vehicle terminals in a V2X communication network. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n. In some embodiment, the RF transceivers 210a-210n are configure to receive an authorization request message from a first user equipment (UE) including a request for authorization to perform a vehicle-to-everything (V2X) communication and transmit an authorization confirmation message corresponding to the authorization request message to the first UE. The authorization confirmation includes an authorization for the first UE to perform the V2X communication and at least one of security keys, device identifiers (IDs), or group IDs for the first UE to perform the V2X communication.

The controller/processor 225 can include one or more processors or other processing devices that control the overall operation of the eNB 102. For example, the controller/ processor 225 could control the reception of forward channel signals and the transmission of reverse channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support beam forming or directional routing operations in which outgoing signals from multiple antennas 205a-205n are weighted differently to effectively steer the outgoing signals in a desired direction. Any of a wide variety of other functions could be supported in the BS 102 by the controller/processor 225. In some embodiments, the controller/processor 225 includes at least one microprocessor or microcontroller.

As described in more detail below, the BS 102 includes circuitry, programming, or a combination thereof for discovery and resource allocation scheme for V2X communication network. The BS 102 (such as managing entity) is configured to receive an authorization request message from a first user equipment (UE) including a request for authorization to perform a vehicle-to-everything (V2X) communication and transmit an authorization confirmation message corresponding to the authorization request message to the first UE. The authorization confirmation includes an authorization for the first UE to perform the V2X communication and at least one of security keys, device identifiers (IDs), or group IDs for the first UE to perform the V2X communication.

For example, controller/processor 225 can be configured to execute one or more instructions, stored in memory 230, that are configured to cause the controller/processor to generate discovery and resource allocation signals for V2X communication network

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the BS 102 to communicate with other devices or systems over a backhaul connection or over a network. The interface 235 could support communications over any suitable wired or wireless connection(s). For example, when the BS 102 is implemented as part of a cellular communication system (such as one supporting V2D, V2I, V2V, D2D, 5G, LTE, LTE-A, or LTE-U(LAA))), the interface 235 could allow the BS 102 to communicate with other BSs over a wired or wireless backhaul connection. When the BS 102 is implemented as an access point, the interface 235 could allow the BS 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a flash memory or other ROM.

Although FIG. 2 illustrates one example of BS 102, various changes may be made to FIG. 2. For example, the BS 102 could include any number of each component shown in FIG. 2. As a particular example, an access point could include a number of interfaces 235, and the controller/processor 225 could support routing functions to route data between different network addresses. As another particular example, while shown as including a single instance of TX processing circuitry 215 and a single instance of RX processing circuitry 220, the BS 102 could include multiple instances of each (such as one per RF transceiver). Also, various components in FIG. 2 could be combined, further subdivided, or omitted and additional components could be added according to particular needs.

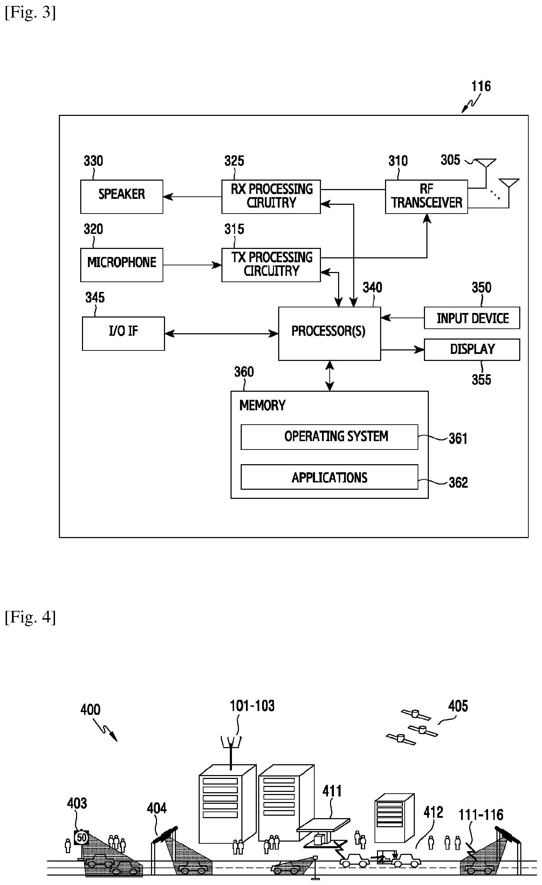

FIG. 3 illustrates an example UE 116 according to embodiments of the present disclosure. The embodiment of the UE 116 illustrated in FIG. 3 is for illustration only, and the UEs 111-115 of FIG. 1 could have the same or similar configuration. However, UEs come in a wide variety of configurations, and FIG. 3 does not limit the scope of this disclosure to any particular implementation of a UE. In one embodiment, the UE 116 may be implemented as a vehicle terminal in a V2X communication network.

As shown in FIG. 3, the UE 116 includes a set of antennas 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, an input device 350, a display 355, and a memory 360. The memory 360 includes an operating system (OS) 361 and one or more applications 362.

The RF transceiver 310 receives, from the set of antennas 305, an incoming RF signal transmitted by an eNB of the network 100. The RF transceiver 310 down-converts the incoming RF signal to generate an intermediate frequency (IF) or baseband signal. In some embodiment, the RF transceiver 310 receives a transceiver configured to transmit an authorization request message to a managing entity and receive an authorization confirmation message corresponding to the authorization request message from the managing entity. In some embodiments, the RF transceiver 310 receives a plurality of messages including control and data messages from the at least one second UE.

The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as identifies at least one second UE within a communication range of the first UE to transmit a plurality of messages comprising a control and data messages, based on receipt of the authorization confirmation message, determines at least one of multiple resource pools to transmit the plurality of messages to the at least one second UE, wherein the multiple resource pools include event-triggered traffic pools and periodic traffic pools, and directly communicates the plurality of messages to the at least one second UE using at least one of the multiple resource pools.

In some embodiments, the processor 340 is configured to measure power received from the at least one second UE based on at least one of a power threshold, an average power, or a distribution of the measured power to identify a location of the at least one second UE.

In some embodiments, the processor 340 determines a single resource pool to transmit the plurality of messages to the at least one second UE, wherein the single resource pool is dynamically partitioned into first resource pool region for the control messages and second resource pool region for the data messages in a frequency domain over a subframe and communicates the plurality of message to the at least one second UE, wherein the plurality of messages is transmitted in the dynamically partitioned single resource pool over a sidelink, wherein the sidelink is a direct link between the first UE and the at least one second UE.

In some embodiments, the processor 340 determines a single resource pool to transmit the plurality of messages to the at least one second UE, wherein the single resource pool is semi-statically partitioned into first resource pool region for the control messages and second resource pool region for the data messages in a frequency domain over a subframe, and communicates the plurality of message to the at least one second UE in the semi-statically partitioned single resource pool over a sidelink, wherein the sidelink is a direct link between the first UE and the at least one second UE.

The processor 340 can move data into or out of the memory 360 as required by an executing process. In some embodiments, the processor 340 is configured to execute the applications 362 based on the OS 361 or in response to signals received from BSs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input device 350 and the display 355. The operator of the UE 116 can use the input device 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

Although FIG. 3 illustrates one example of UE 116, various changes may be made to FIG. 3. For example, various components in FIG. 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the UE 116 may include only one antenna 305 or any number of antennas 305. Also, while FIG. 3 illustrates the UE 116 configured as a mobile telephone or smartphone, UEs could be configured to operate as other types of mobile or stationary devices.

A communication system includes a downlink (DL) that conveys signals from transmission points such as base stations (BSs) or eNodeBs to user equipments (UEs) and an uplink (UL) that conveys signals from UEs to reception points such as eNodeBs. Additionally a sidelink (SL) may convey signals from UEs to other UEs or other non-infrastructure based nodes. A UE, also commonly referred to as a terminal or a mobile station, may be fixed or mobile and may be a cellular phone, a personal computer device, etc. An eNodeB may also be referred to as an access point or other equivalent terminology.

The vehicular communication, referred to as vehicle-to-everything (V2X), contains vehicle-to-vehicle (V2V) communications, vehicle-to-infrastructure (V2I) communications, and vehicle-to-pedestrian (V2P) communications. The V2X communication can use "co-operative awareness" to provide more intelligent services for end-users. This means that transport entities, such as vehicles, roadside infrastructure, and pedestrians, can collect knowledge of their local environments (such as information received from other vehicles or sensor equipment in proximity) to process and share that knowledge in order to provide more intelligent services, such as cooperative collision warning or autonomous driving.

V2X communication can be used to implement several types of services that are complementary to a primary communication network or to provide new services based on a flexibility of a network topology. V2X can support unicasting, broadcasting, or group/multicasting as potential means for V2V communication where vehicles are able to transmit messages to all in-range V2V-enabled devices or to a subset of devices that are members of a particular group. In such instance, a LTE-D2D protocol or on a specialized LTE-V2V protocol.

V2X can support V2I communication between one or more vehicles and an infrastructure node to provide cellular connectivity as well as specialized services related to control and safety of vehicular traffic. V2P communication can also be supported, for example to provide safety services for pedestrians or traffic management services. V2X multicast communication can be used to provide safety and control messages to large numbers of vehicles in a spectrally efficient manner. The two primary standardized messages for V2V/V2I communication are the periodic beacons called co-operative awareness messages (CAM) and the event-triggered warning messages, called decentralized environment notification messages (DENM). The CAMs are periodically broadcasted beacons used to maintain awareness of the surrounding vehicles. These messages are sent with an adaptive frequency of 1-10 Hz. The CAMs include information such as position, type and direction. The DENMs are event-triggered warning messages which are generated to alert neighboring vehicles about potential hazards.

While vehicle devices can be able to support many different communication protocols and include support of mandatory or optional features, since the traffic types, QoS requirements, and deployment topologies are distinct from other types of communications, the hardware/software on a vehicle for supporting V2X can have a reduced or specialized functionality compared to other devices. For example, protocols related to low-complexity, low-data rate, and/or low-latency for machine-type communications can be supported such as, for example, traffic tracking beacons. Satellite-based communication can also be supported for V2X networks for communication or positioning services.

Direct communication between vehicles in V2V is based on a sidelink (SL) interface. The sidelink is the UE to UE interface for SL communication and SL discovery. The SL corresponds to the PC5 interface (such as described in LTE specification). The SL communication is defined as a functionality enabling proximity services (ProSe) direct communication (such as described in LTE specification) between two or more nearby UEs using E-UTRA technology but not traversing any network node.

E-UTRAN allows such UEs that are in proximity of each other to exchange V2V-related information using E-UTRA(N) when permission, authorization and proximity criteria are fulfilled. The proximity criteria can be configured by the MNO. However, UEs supporting V2V service can exchange such information when served by or not served by E-UTRAN which supports V2X Service. The UE supporting V2V applications transmits application layer information (such as location, dynamics, and attributes as part of the V2V Service). The V2V payload may be flexible in order to accommodate different information contents, and the information can be transmitted periodically according to a configuration provided by the MNO. V2V is predominantly broadcast-based; V2V includes the exchange of V2V-related application information between distinct UEs directly and/or, due to the limited direct communication range of V2V, the exchange of V2V-related application information between distinct UEs via infrastructure supporting V2X service (such as RSU, application server, etc.)

FIG. 4 illustrates an example long-term evolution vehicle (LTE V2X) communication network 400 according to embodiments of the present disclosure. An embodiment of the LTE V2X network 400 shown in FIG. 4 is for illustration only. Other embodiments may be used without departing from the scope of the present disclosure.

As illustrated in FIG. 4, V2X communication may be used to implement many kinds of services that are complementary to the primary communication network or provide new services based on the flexibility of the network topology. V2X may support unicasting, broadcasting, or groupcasting is a potential means for V2V communication where vehicles are able to transmit messages to all in-range V2V-enabled devices or a subset of devices which are members of particular group. A protocol may be based on LTE-D2D or a specialized LTE-V2V protocol. V2X can support V2I communication between one or more vehicles and an infrastructure node (101-103) to provide cellular connectivity as well as specialized services related to control and safety of vehicular traffic. V2D communication for UE's 111-116 can be supported as well, for example to provide safety services for pedestrians or traffic management services. V2X multicast communication can be used to provide safety and control messages to large numbers of vehicles in an efficient fashion.

While vehicle devices may be able to support many different communication protocols, and mandatory and optional features, since the traffic types, QoS requirements, and deployment topologies are distinct from other types of communication, the hardware/software on a vehicle for supporting V2X may have a reduced or specialized functionality compared to other devices. For example protocols related to low-complexity, low-data rate, and/or low-latency, machine-type communication protocols 404 may be supported (such as traffic tracking beacons).

Satellite-based communication 405 may also be supported for V2X networks for communication or positioning services. Additionally networks may require devices to operate in near simultaneous fashion when switching between V2X communications modes. Vehicle-to-vehicle communication 412 may also be supported for V2X networks for communication or positioning services.

V2X requires resource allocation mechanisms since multiple V2X UEs may have a need to utilize the same time/frequency resources as other V2X or cellular or D2D UEs. In addition to resource allocation signaling for the transmitting UEs, in the case of V2X, receiving UEs may also require resource allocation signaling in order to determine which time/frequency resources to monitor to receive the transmissions of one of more V2X UEs. Different resource allocation granularity may need to be supported depending on multiple factors including deployment scenarios (such as in/ outside network coverage) and traffic types (such as unicast, groupcast, video, etc.).

Traditionally for centralized resource management, a central controller (such as managing entity) like the eNB collects all the channel state information of every UE in the cell and allocates the available resources to maximize a throughput according to fairness and power constraints. For UEs within network coverage, the eNB may be responsible for allocating resources for a group of UEs. Based on the eNB or autonomous resource selection, the transmitting UEs can provide a scheduling assignment signaling indicating the resources the Rx UEs monitor for reception of the data.

On the other hand, especially considering an out-of-network coverage scenario, UEs can determine their resource allocation in a distributed fashion. Simple random resource selection may be considered as a baseline distributed approach with a low overhead and scalability. One drawback of such an approach is that collisions are possible among broadcasting UEs. Thus an implicit coordination (such as carrier sensing) and/or explicit coordination (such as sensing based on scheduling assignment transmission) would be required to prevent collisions and mitigate interference.

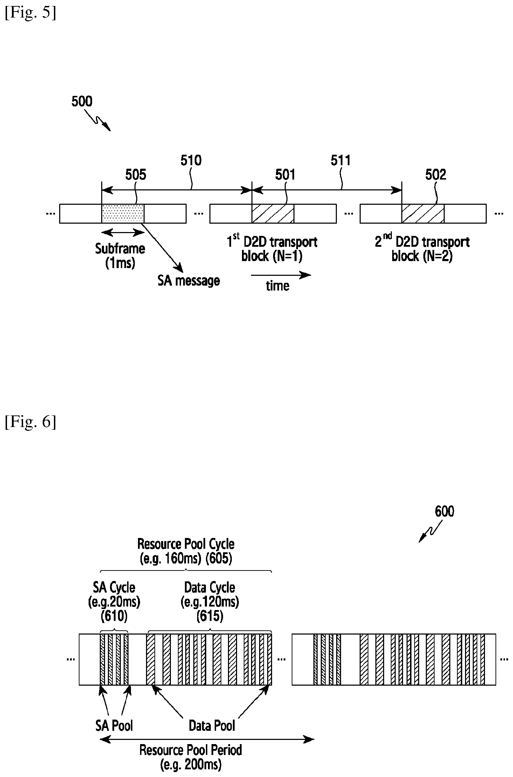

FIG. 5 illustrates an example different scheduling assignment (SA) offset and device-to-device (D2D) data periodicity 500 according to embodiments of the present disclosure. An embodiment of the different SA offset and D2D data periodicity 500 shown in FIG. 5 is for illustration only. Other embodiments may be used without departing from the scope of the present disclosure.

As illustrated in FIG. 5, D2D data transmission time/frequency resources 501, 502 may be independently configured from time/frequency resources utilized by a scheduling assignment used for control 505. The period between SA transmissions scheduling new data transmissions 510 may be different than the data transmission period 511 to accommodate different SA periods and variable amounts of cellular time resources multiplexed with D2D subframes in the overall LTE system.

FIG. 6 illustrates an example SA and data resource allocation 600 according to embodiments of the present disclosure. An embodiment of the SA and data resource allocation 600 shown in FIG. 6 is for illustration only. Other embodiments may be used without departing from the scope of the present disclosure. As shown in FIG. 6, the SA and data resource may be allocated into a resource pool cycle 605. More specifically, the resource pool cycle 605 comprises a SA cycle 610 and data cycle 615. Resource pools can be defined as periodic sets of time/frequency resources which UEs utilize for a given D2D transmission and receiving UEs can search for potential transmissions, including scheduling assignments and data transmissions as shown in FIG. 6.

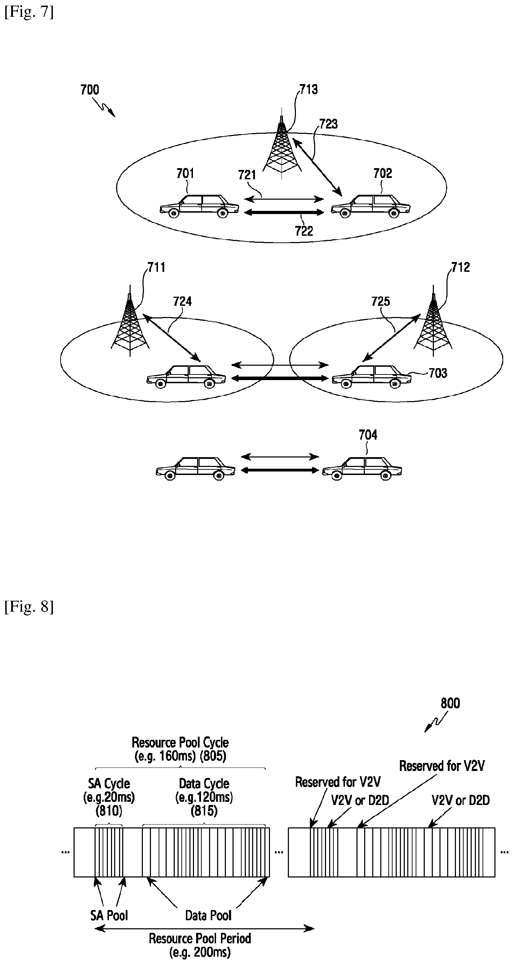

FIG. 7 illustrates an example vehicle-to-vehicle (V2V) communication network 700 according to embodiments of the present disclosure. An embodiment of the V2V communication network 700 shown in FIG. 7 is for illustration only.

As illustrated in FIG. 7, the V2V communication network 700 comprises BSs (such as managing entity) 711, 712, 713, vehicles or UEs 701, 702, 703, 704. The V2X UE 701, is capable of communicating with one or more V2X UEs 702 that are in proximity range and connected to the same BS 713, or the V2X UE 703 connected to a different cell of the same or different BS 712, or the V2X UE 704 outside of network coverage, exchanging control message 721 and data message 722 over communication links (such as sidelinks) potentially supplemented by network control links 723, 724, 725.

Several schemes can be considered for providing the control and data links between vehicles in the different deployment scenarios. In such embodiments, different LTE channels (such as DL, UL, SL, or a vehicle link (VL)) and different LTE protocols including broadcast (such as enhanced multimedia broadcast/multicast service (eMBMS) or mode 1 or mode 2 broadcast communication), unicast, or discovery (such as type 1 or type 2 or V2V discovery (type V)) may be configured. Multiple combinations of communication links and protocols can be envisioned to provide a transfer of different types of control and data transmissions.

In some embodiments, a V2V communications protocol may be based upon a LTE-D2D broadcast/groupcast communications protocol. In such embodiments, a group of V2V enable UEs may communicate a series of control and data messages (such as for safety or multimedia services). For example, a V2V communications protocol may include an authorization, a resource allocation, a V2V association, and a V2V communication.

In some embodiments of authorization, a V2V UE sends an authorization message to a managing entity (such as eNB or V2X server) and potentially receives an authorization confirmation message in return in addition to necessary security keys or unique device identifiers and group identifiers. In one example, an authorization may be performed based on a pre-configuration based upon authentication keys or IDs stored in hardware and/or software. In another example, the V2V authorization may utilize a combination of keys, IDs, and messages based on network-specific parameters (such as PLMN ID, V2V server connection, PCID, broadcast area ID), V2V UE-specific (ID, UE type), and location-specific parameters (such as GNSS-based position estimate).

In some embodiments of resource allocation, a V2V UE determines a set of time/ frequency resources for transmitting control and data messages. In one example, if V2V transmissions are based upon an LTE-D2D protocol, resource pools can be defined as periodic sets of time/frequency resources that UEs utilize for a given V2V transmission and receiving V2V UEs can search for potential transmissions, including control and data transmissions as shown in FIG. 6. Therefore, D2D resource pools can be additionally envisioned where separate SA and data resource pools are configured for V2V traffic from those configured for D2D broadcast and groupcast communication. In addition, the resource pools for the V2V and D2D traffic may be allowed to overlap in time and frequency.

FIG. 8 illustrates an example SA and data resource allocation 800 for V2V and D2D traffic according to embodiments of the present disclosure. An embodiment of the SA and data resource allocation 800 for V2V and D2D traffic shown in FIG. 8 is for illustration only.

As illustrated in FIG. 8, the SA and data resource may be allocated into a resource pool cycle 805. More specifically, the resource pool cycle comprises a SA cycle 810 and data cycle 815. As illustrated in FIG. 8 certain subsets of the SA cycle 810 and the data cycle 815 may be reserved for one traffic type (such as V2V traffic), while the remainder of the pool can be utilized by both V2V and D2D traffic as shown in FIG. 8.

In one embodiments, V2V and D2D UEs may monitor both the reserved subset and the general subset for SA transmissions while only V2V UEs may transmit SA over the SA cycle 810 in the reserved portion so that D2D UEs avoid the allocation of V2V UEs in the general data subset and V2V UEs may schedule transmissions in both the dedicated and general SA and data pools.

Multiple resource pools may be configured using independent bitmaps with different support lengths and periodicities for different traffic types (such as V2V/D2D or periodic/event-triggered) and the (re)configuration of the parameters may be performed using the same or different higher-layer control message. One benefit of this overlapping pool configuration is to provide priority for one type of traffic (such as different allocations depending on message size, priority, or periodicity, including periodic message and aperiodic or event driven messages). In addition, the overlapping configuration may be applied to other configurations such as V2V or D2D only or mixed traffic from different groups, or with different traffic types or QoS requirements.

In one example of resource allocation in a reserved or shared pool, a V2V UE that is attempting to transmit a SA and/or related data transmission may first monitor an SA pool and may additionally decode transmissions from other V2V UEs in a range. Based on the detection of SA transmissions in a given set of resources (such as based on energy or RS detection) and/or decoding of the SA message containing a resource allocation for transmissions (such as frequency or time pattern), the V2V UE may determine an appropriate SA (and possibly also data) resource allocation by selecting orthogonal resources or resources with below a configured energy threshold. In addition, resources may be based upon other factors, including a transmission type or priority, a device or group ID, or location information (such as global navigation satellite system (GNSS)-based location).

In one example, a multivariate function may be applied when selecting the SA/data allocation with multiple weighted inputs for different metrics including measurement, traffic type/priority, and location. In such examples, resource grouping based on location may first be applied to the set of available SA/data resources and from that set the V2V UE may select the resource(s) with the lowest energy or energy below a configured threshold, and finally a frequency/time domain resource allocation pattern is selected as a function of the device/group/destination ID.

In some embodiments of V2V association, a V2V UE determines a set of V2V UEs from which to send and receive control and data messages. In one example, if only broadcast communication is utilized the V2V UEs may not need to perform group association or group association is directly mapped to a single broadcast group ID that may be provided in the authorization step or preconfigured step. In another example, an association may be performed based upon a received signal strength threshold with one or more communication channels or signals. In such example, one or more communication channels and signals include primary D2D synchronization signal (PD2DSS), a primary D2D shared channel (PD2DSCH), SA, or sidelink data and RS or new V2V control and data channels. In yet another example, the association may be determined based on device discovery using a physical discovery signal message (such as LTE-D2D discovery, direct short range communication (DSRC), or a new device discovery protocol) or based on a broadcast or exchange of absolute or relative location information (such as GNSS, code division GPS (CDGPS), cm-accurate mobile positioning system (CAMPS) etc.).

In such example, the frequency of (re)association may be preconfigured or configured by the network. Additionally, the time period of association may be a function of vehicle type, location, or trajectory information. For example a group of vehicles associated as a 'platoon' that are in close proximity and sharing a similar trajectory may perform association more frequently than a group of stationary or slow-moving vehicles. In yet another example, the association may be between UEs traveling in the same lane or with the same trajectory. However vehicles with an opposite or perpendicular trajectory may be excluded from association or associated with a different set.

In some embodiments of V2V communication, a V2V UEs may transmit and receive control and data transmissions after the authorization, resource allocation, and association. In one example, the transmissions may be based on LTE-D2D broadcast communication. In another example, a modified V2V communications protocol may be utilized. In such examples, while for D2D control (such as SA) and data transmissions utilize different messages and resource pools, some control and data information may be combined to reduce latency and improve a reliability of the transmission and reception.

In some embodiments, a V2V communication control message (V2V-CM), sent in physical sidelink control (PSCCH) for example, may utilize one or more formats depending on whether data is additionally multiplexed along with control information providing time/frequency allocation and other parameters for V2V communications data messages (V2V-DM) which can be transmitted in physical sidelink shared channel (PSSCH), for example. In addition, the contents of the V2V-DM may contain control information for scheduling one or more additional V2V-DM. This can be beneficial to support multiplexing of broadcast, groupcast, and unicast messages in V2V resource pools. The control and data information may be carried in physical layer contents of the V2V-CM or V2V-DM, or may be transported in a higher layer message format. In one example, the first control format may be configured with one set of transmission parameters (such as transmission power, modulation coding scheme (MCS), and number of repetitions), while the second control format may be associated with a second set of transmission parameters.

The indication of the control format may be provided in the downlink resource allocation grant in the case of eNB-scheduled V2V transmissions and may additionally be indicated by a format flag in the V2V control message to allow receiving UEs to differentiate between the control and corresponding data transmission formats.

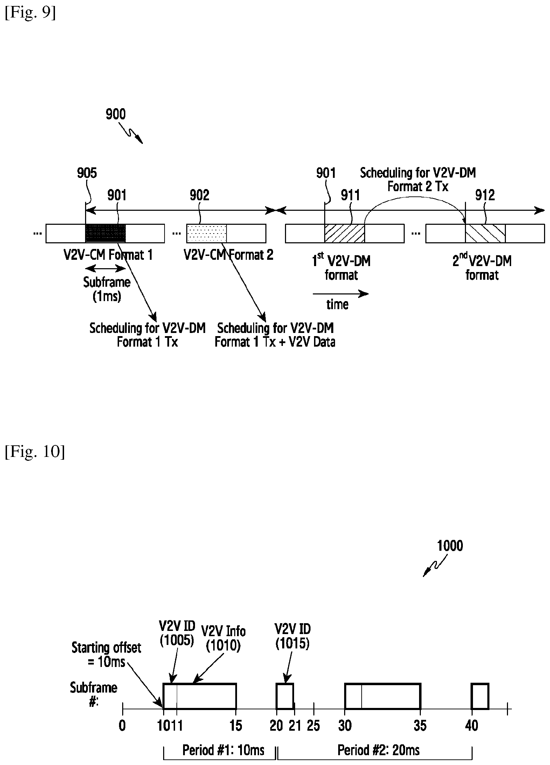

FIG. 9 illustrates an example control and data transmission 900 for V2V communication according to embodiments of the present disclosure. An embodiment of the control and data transmission 900 for the V2V communication shown in FIG. 9 is for illustration only.

As illustrated in FIG. 9, a V2V-CM and V2V-DM may have different formats and resource allocation schemes. Two different V2V-CM formats 901, 902 (such as format 1, format 2) are transmitted that may utilize the same or different time/frequency resource pools allocated for control information. The period between V2V-CM transmissions over the V2V-CM formats 901, 902 may be different and depending on the message format and contents. Additionally, different data transmission periods for the V2V-DM formats 911, 912 (such as first format, second format) may also be accommodated. A first data transmission format 911 may be utilized to send V2V broadcast messages and additionally schedule subsequent groupcast or unicast V2V transmissions over the second format 912. In one example, a V2V communications protocol may operate in an ad-hoc manner (such as if the vehicles are operating outside of network coverage or authorization is pre-applied using a different scheme). In such examples, resource allocation, group association, and group communication may be achieved.

In some embodiment, a V2V UE may communicate with other V2V UEs by utilizing higher layer (such as L2, L3, or application layer) messages abstracting the physical layer protocol from the lower layers, and making the V2V protocol transparent to the radio access protocol (such as radio link control (RLC) or transmission control protocol (TCP) and below). This may be beneficial to support over-the-top (OTT) applications that are agnostic to a radio access technology (RAT) utilized to transmit the messages (such as DSRC, 802.11p, D2D, cellular, Wi-Fi Direct, or LTE-V2V) and may switch between or simultaneously use different RATs for one or more traffic flows. Additionally this method may be used to support inter-operator or fully ad-hoc V2V communication and discovery. For example two vehicles may be served by different operators utilizing the same RAT for V2V links (such as LTE-V2V) or may utilize different RATs (such as LTE-V2V and DSRC).

In some embodiments, a V2V packet may be passed directly from radio access layers to an application layer where an application layer header may be added to the V2V packets to indicate the source/destination IDs as well as any lower-layer packet indexing parameters for different V2V flows, while the lower layers process all packets from the application in the same manner (such as using the same source/ destination IDs).

In some embodiments, an authorization/control message can be exchanged between V2V UE and a managing entity (e.g. eNB, V2X server) to support V2V communication that can be served over different RATs. In one example, upon initiation of the V2X protocol, a V2V UE may provide a network with a message indicating one or more of an operator ID, a device ID, vehicle type information, supported V2X protocols and frequencies, and a unique ID(s). The network may utilize this information to configure broadcast/groupcast parameters and resource configurations for the V2V UE at lower layers and associate support access technologies with different groups of V2V UEs or other V2X nodes to facilitate inter-RAT links.

In some embodiments, periodic beacons may be transmitted by V2X UEs carrying information about the support for a given application layer V2V/V2X communications protocol. These beacons may provide information as described above and the periodicity may be preconfigured with multiple supported periodicities depending on the priority of the control information or dynamics of the vehicle (such as speed, location, type). In addition, the beacons for supporting the application layer V2V may be transmitted using a single radio access technology or may be transmitted across multiple radio access technologies supported by a V2V UE.

In some embodiments, due to the frequent mobility of V2V UEs, a device discovery may need enhancements based upon the LTE-D2D discovery protocol. In one example, a periodicity of D2D discovery transmissions for V2V UEs may be independently configured from the period configured for D2D UEs. In such example, separate system and control information for resource allocation may be provided. In another example, in addition to providing the D2D ID as part of the discovery message, location, trajectory, group or network ID, security parameters, and/or safety assistance information may be provided as part of the discovery message broadcast. This additional information may be provided on a separate channel or using a new discovery message format. In such embodiments, the V2V discovery information may be provided with the same periodicity and/or different periodicity of the V2V discovery information may be utilized based on a (pre)configuration. In such examples, multiple messages sizes may be supported for V2V discovery messages, where a first message size provides the V2V ID only, while a second V2V message provides the ID, as well as additional location and trajectory information. In yet another example, the security parameters may be configured in such a way that successful authentication/decoding of a V2V discovery message requires combination of one or messages from the same V2V UE, utilizing parameters such as the V2V ID and location information.

FIG. 10 illustrates an example configuration of V2V discovery period 1000 according to embodiments of the present disclosure. An embodiment of the configuration of V2V discovery period 1000 shown in FIG. 10 is for illustration only.

As illustrated in FIG. 10, the V2V discovery period 1000 comprises V2V IDs 1005, 1015 and V2V information 1010. As illustrated in FIG. 10 the V2V discovery period 1000 includes different periodicity for V2V discovery ID only transmissions 1015 and V2V discovery messages 1010 containing additional information 1010. The V2V discovery IDs 1005, 1015 are transmitted with a period of 10ms, while the V2V discovery message 1010 is transmitted with a period of 20ms.

In some embodiments, a UE may utilize one or more measurements of the channel(s) utilized for V2V communication to adapt resource allocation and/or other transmission parameters including transmit power, MCS, and number of transmission repetitions. In one example of V2V measurement, Rx range estimation metric can be computed based on the received power of other V2V discovery, control, and/or data transmissions. The V2V UE can compute the received power of the V2V transmissions and can estimate an effective range for V2V transmissions, including a minimum and maximum value, average value, or distribution (such as histogram or cumulative distribute function (CDF)) of the received power of one or more V2V transmissions. In addition, the period over which the measurement is performed or updated can be configured or may be a function of message type or vehicle location/velocity. In addition, the range of the measurement quantity may also be configured. In such examples, maximum and minimum thresholds may be indicated to the V2V UE and/or may be fixed based on a message type or other characteristics such as the velocity/location of the UE.

In some embodiments of Rx range estimation metric, a V2V UE performing measurements may group measurement values based on a group ID or location provided in the V2V discovery or communication messages. For example, a V2V UE may receive messages from multiple groups and can construct Rx range estimate based on the messages received which correspond to the same group ID. A measurement grouping could be performed on a basis of message type, priority, resource pools, higher layer parameters, or other metrics. In one example, the group ID is carried by a broadcast control message or may be carried by a higher layer message. A set of IDs used for constructing range/received power metrics may be configured by higher layers. In another example, Tx range estimation metric can be computed at a given V2V UE based on feedback on the Rx range estimated by other V2V UEs for the given V2V UE. The exchange of the estimated range may be based on an absolute value, or a relative value to an offset, and may be indicated in a V2V discovery, control, or data message in an L1 or L2 payload, or application layer. In yet another example, range/ received power metric(s) may be reported to an eNB (such as managing entity) or UE-type road side unit (RSU) for adapting transmission parameters (such as Tx power, MCS, time/frequency allocation and repetition number) in a V2V radio resource management (RRM) message report.

A message may contain one or more IDs and associated absolute or relative range/ received power measurements. The periodicity of these reports may be indicated to the UE (such as a configured timer value) or the UE may autonomously report the metrics based on an event-trigger mechanism (such as a value above a threshold).

In some embodiments, event triggered messages, though infrequently, need to be prioritized to communicate safety information. This embodiment considers multiple techniques to prioritize event triggered messages for V2V communication. V2V communication is expected in scenarios with and without network coverage. Both control and data messages will be sent over the V2V communication physical channels. In one example, resource pools can be defined as periodic sets of time/frequency resources that UEs utilize for a given V2V transmission and receiving V2V UEs can search for potential transmissions, including control and data transmissions.

In some embodiments of event-triggered prioritization, different types of V2V messages can be sent over the V2V physical channels. Resource pool partitioning or configuration of multiple pools can be applied to support multiple priorities for event-triggered and periodic traffic.

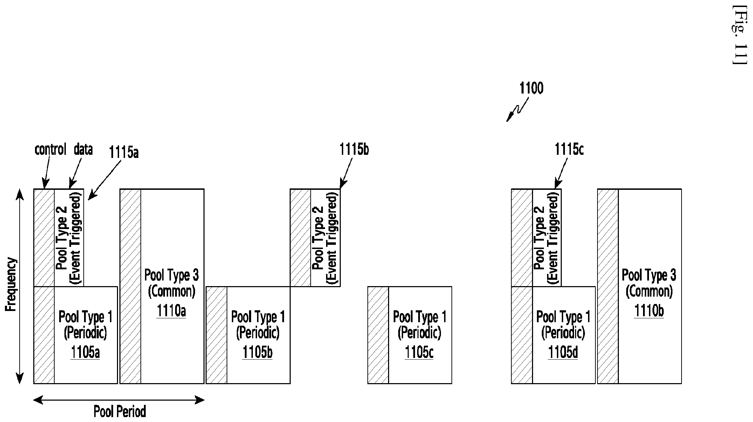

FIG. 11 illustrates an example configuration of multiple frequency division multiplexing/time division multiplexing (FDM/TDM) resource pools 1100 according to embodiments of the present disclosure. An embodiment of the configuration of multiple FDM/TDM resource pools 1100 shown in FIG. 11 is for illustration only.

As illustrated in FIG. 11, the multiple frequency FDM/TDM resource pools 1100 comprise pool types 1 1105a, 1105b, 1105c, pool types 2 1115a, 1115b, 1115c, and pool types 3 1110a, 1110b. As illustrated in FIG. 11, multiple pools are configured for different traffic types (as well as possibly shared/common pools) with different periodicities, which are TDMed or FDMed with one another. A common or shared pool could be utilized by multiple traffic types to allow efficient utilization of the resources depending on variable traffic load. For example a set of predefined resources may be selected inside the common pool (such as pool type 3 1110a, 1110b), or selection may utilize a priority or preemption mechanism. The size of resource pool for event-triggered (such as pool type 2 1115a, 1115b, 1115c) service can be a smaller than the resource pool for periodic service (such as pool type 1 1105a, 1105b, 1105c, 1105d), as the amount of vehicles encountering the triggering event is expected to be small. Meanwhile, the periodicities of the resource pool for event triggered service 1115a, 1115b, 1115c have to be shorter, since event-triggered services 1115a, 1115b, 1115c, usually have more stringent latency and reliability requirement.

In one example, a typical latency requirement for a V2V messages is 100ms. In another example, sidelink resource pool configurations can be enhanced by introducing shorter periods for control and data pools than supported for other traffic types (such as D2D). In addition, flexible multiplexing of the resources used for control and data channel transmissions in the same pool can also be considered.

Given the importance of event triggered messages, it may be communicated to a large number of devices as quickly as possible and with high reliability. In one embodiment of event-triggered message prioritization, event triggered messages are always configured to be sent with a (pre)configured set of parameters. In one example, the event triggered messages are always sent with a maximum transmission power and at the lowest MCS to maximize the range and reliability of these messages at the lowest latency. In another example, a traffic type flag (such as one or more bits) may be introduced into the uplink request message in order to indicate to the eNB allocating resources for V2V transmission that a given message is of a given traffic type (such as event or periodic). In yet another example, the corresponding downlink grant for V2V resource allocation may also contain a traffic type flag (such as one or more bits) that is used to configure a specific set of transmission parameters (such as power control, MCS, repetition number), where the multiple sets of parameters are configured by higher layer (such as RRC signaling).

The resource pools operation defined for D2D communication can be used as a baseline for defining the resource allocation mechanisms for V2V. However two of the main requirements, reliability and latency for V2V communication, are increased. In addition, some of transmission parameters that may be used for control and data messages may be modified to support better reliability and more scheduling flexibility. In one example, for D2D communication, a time resource pattern for retransmissions of MAC PDUs is derived from a bitmap mapped to available D2D data subframes within a configured data pool. Since a number of MAC PDU retransmissions is fixed to 4, a subset of all possible pattern configurations is specified to reduce signaling overhead. However, for V2V, different numbers of retransmissions can be configured, signaled, or utilized as a tradeoff between latency/reliability and signaling overhead.

In addition, a length of the bitmap can be variable depending on the size of the resource pool which can also be adapted to scale proportionally with the density of traffic in a given geographical area. However, a minimum length may be utilized, corresponding to a default resource pool configuration to provide a minimum guaranteed capacity and latency for the system. The V2V control message payload may dynamically indicate one or more of the transmission and resource allocation parameters, while other parameters may be semi-statically adapted by higher layer signaling or pre-configured. In one example, the V2V control message payload may indicate the transmit power, MCS, and number of repetitions. In addition, event triggered traffic is sent at maximum power and lowest MCS to provide highest reliability in case of collisions while periodic messages are power controlled depending on distance to the UE type or eNB type RSU. The closer the RSU, the lower is the power used for periodic transmission. The receiver may always monitor the event triggered SA pool to see if there is allocation of an event triggered message. It should be noted that the methods above may be utilized for prioritization of other traffic types than event-triggered messages.

In some embodiments, multiple SA and data transmissions are FDMed in the same subframe using separate resource pools for SA and data for V2V communication using PC5 interface. A separate SA pool is reserved for event triggered messages. In one example, a single SA pool may be configured to be semi-statically (such as by higher layer signaling) or dynamically partitioned between SA resources for supporting multiple traffic types (such as event-triggered and periodic traffic), priorities, or groups (such as vehicular platoons). The frequency location of SA pool for event triggered messages may be kept fixed or can be in one of multiple fixed frequency locations, in case it is repeated for increased reliability with frequency diversity. The bandwidth used by the SA for event triggered traffic can be kept fixed. The data transmission can be kept contiguous to the SA transmissions in frequency to minimize in-band emissions. The data pool can be shared between different traffic types (such as event triggered and periodic traffic) or also semi-statically or dynamically partitioned. The partitioning may be performed by higher layer signaling, or a broadcast channel providing system information.

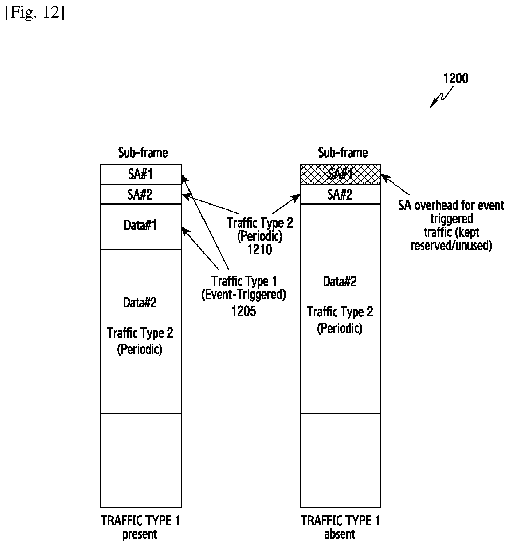

FIG. 12 illustrates an example multiple traffic types of FDM 1200 according to embodiments of the present disclosure. An embodiment of the multiple traffic types of FDM 1200 shown in FIG. 12 is for illustration only.

As illustrated in FIG. 12, the multiple traffic types of FDM 1200 comprises traffic type1 1205 and traffic type 2 1210. More specifically, the traffic type 1 1205 is an event-triggered frame and the traffic type 2 1210 is a periodic frame. Each of traffic type further comprises SA and data portion. As illustrated in FIG. 12, the SA portions (such as SA#1 and SA#2) and data portions (such as data #1 and data #2) for a single transmitter are separated in a frequency domain when both event-triggered and periodic traffic are present. As illustrated in FIG. 12, the periodic traffic may be contiguous when the event triggered traffic is not present. The frequency locations of the event triggered SA pool (such as SA #1 in FIG. 12) may not be used by the periodic traffic in this case and is considered as a necessary overhead for allowing event triggered messages with high reliability. In one example, the periodic traffic (such as traffic type 2 1210) may not be contiguous even when the event triggered traffic is not present. The presence or absence of the event-triggered traffic (such as traffic type 1 1205) may be determined by one or more factors including physical or virtual (such as SA decoding) carrier sensing of event-triggered SA and data transmissions.

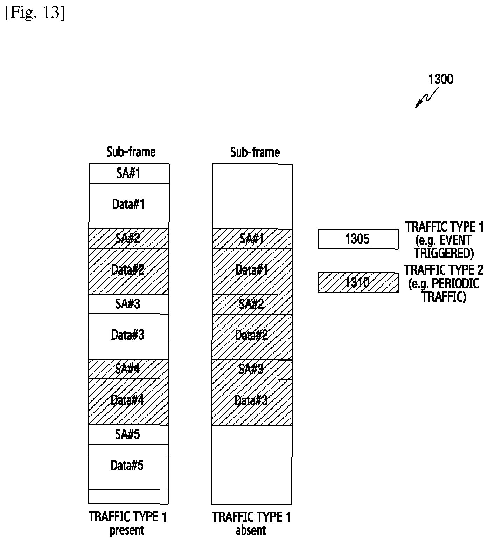

FIG. 13 illustrates an example multiple traffic types of frequency-distributed SA and data pools 1300 according to embodiments of the present disclosure. An embodiment of the multiple traffic types of frequency-distributed SA and data pools 1300 shown in FIG. 13 is for illustration only.

As illustrated in FIG. 13, the multiple traffic types of frequency-distributed SA and data pools 1300 comprises traffic type1 1305 and traffic type 2 1310. More specifically, the traffic type 1 frame 1305 is an event-triggered frame and the traffic type 2 1310 is a periodic frame. As illustrated in FIG. 13, frequency distributed resource pools for SA and data pools where the event-triggered and periodic traffic are transmitted in an FDM manner in the same subframe. As shown in FIG. 13, different frequency distribution patterns for the SA and data pools may be applied in a semi-static or dynamic manner to adjust traffic load and provide a tradeoff between the overhead of reserving resources for event-triggered traffic. The SA and data transmission pools may also be repeated for increased reliability in case of collisions and frequency diversity. In addition, as illustrated in FIG. 12, the size of the available resources for a given SA transmission in the distributed SA pool may be fixed, while the available resources for a given data transmission may be variable within a few fixed or configured sets of resources.

In some embodiments, a UE and/or eNB may utilize geographical information in assisting resource selection for V2V or V2I transmissions. In one example the resource pool may be mapped to one or more geographical information values or range of values. In another example the resource pool may be divided into multiple subsets which are mapped to one or more geographical information values or range of values. The geographical information may be associated with resource allocation parameters such as time/frequency resources for control/data messages, transmit power, number of repetitions, MCS, and periodicity of message transmission.

In such embodiments, the geographical information may include one or more of the following: 1) user location coordinates (x/y/z in absolute reference frame from e.g. GNSS post-processing), 2) user pseudo-range coordinates ( 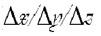 in relative reference frame e.g. from GNSS pre-processing), 3) relative location coordinates (Δx/Δy/Δz in relative reference frame e.g. other vehicle, eNB, positioning reference station, etc.), 4) vehicle orientation or heading, including absolute direction N/W/S/E etc. or relative direction (e.g. map lookup table, relative to other vehicle, eNB, positioning reference station, etc.), 4) vehicle speed/velocity/dynamics (such as absolute value (km/h) or relative to reference value or other vehicles), 5) vehicle type (such as emergency vehicle, platoon, etc.), and 6) landmark or other external reference (such as lane or road ID).

In one embodiment, the geographical information may be conveyed by one or more physical or higher layer channels/messages. The information, including the examples listed previously may be transmitted as a value (with quantization possibly applied) or as an index to one or more lookup tables. The geographical information tables may be configured by higher layer signaling (such as RRC or system information block (SIB)), may be preconfigured, or provided by an application layer. In one example, the time stamp of when the geographical information was determined may be provided along with the geographical information.

In another embodiment, the geographical information may be conveyed by a PC5-V2V physical control, data, or broadcast channel. In one example, the geographical information may be carried in a field of the broadcast channel or control channel message (such as physical sidelink broadcast channel (PSBCH) or SA). In another alternative the geographical information may be carried in the payload of the data message. In yet another alternative the presence of the geographical information may be indicated by a field in the physical control, data, or broadcast message. In such embodiments, the geographical information may be present in every transmission or may be associated with only a subset of transmissions based on a periodic or aperiodic indication. The period of transmission or update of the geographical information may be fixed, or configurable by higher layers (such as RRC or SIB) and may depend on the vehicle location and/or dynamics (such as velocity, emergency priority etc.). For example, as the vehicle speed is increased, the geographical information is updated more frequently. Similarly, if the vehicle speed decreases, the geographical information can be updated less frequently.

In one example, the geographical information may be transmitted or updated every 1 Hz, while the periodic V2V message is transmitted at 10Hz. Whether or not the geographical information has been updated relative to a previous transmission may be indicated in a field in the physical control, data, or broadcast message. In yet another example the scrambling code or ID used may implicitly indicate the geographical information (such as vehicles traveling in direction y utilize scrambling ID Y, while vehicles traveling in direction x utilize scrambling ID X). In another example the time/ frequency resource assignment used to transmit the physical channel/message containing the geographical information may be used to implicitly indicate geographical information (such as vehicles traveling in direction y utilize time/frequency resource pool subset Y, while vehicles traveling in direction x utilize time/frequency resource pool subset X). In yet another example, the geographical information may be conveyed by a PC5-V2V higher layer message. In such examples, the geographical information may be conveyed by one or more fields in a MAC message format. The geographical information may be present in every higher layer transmission or may be associated with only a subset of transmissions based on a periodic or aperiodic indication.

The period of transmission or update of the geographical information may be fixed, or configurable by higher layers (such as RRC or SIB) and may depend on the vehicle location and/or dynamics (such as velocity, emergency priority etc.). For example, the geographical information may be transmitted or updated every 1 Hz, while the periodic V2V message is transmitted at 10Hz. Whether or not the geographical information has been updated relative to a previous transmission may be indicated in a field in the MAC header or payload.

In yet another example, the geographical information may be conveyed by an application layer message. In yet another example, the geographical information may be conveyed to the network by a UL or PC5 message. This is beneficial in the case of Mode 1 V2X transmissions where the eNB selects one or more resource subsets based on the UE provided vehicle information. In such examples, the geographical information may be contained in a buffer status report (BSR) or V2V scheduling request message in a physical layer payload or MAC message payload. In yet another example, the geographical information may be provided in a dedicated UL or PC5 control message (such as location-request feedback message). In yet another example, the geographical information may be provided in RRM message as part of one or more measurement or dedicated location feedback report configurations.

The geographical information may be present in every transmission or may be associated with only a subset of transmissions based on a periodic or aperiodic indication. For example a DL or PC5 control message may trigger a geographical information update message to be transmitted by the vehicle to the network or one or more vehicles. The geographical information update may be triggered by a field (such as when set to 1) in the DL or PC5 control message. In one example, Mode 2 resource allocation is based on geographical information. In another example, the mapping/ association of the geographical information with one or more resource allocation parameters such as time/frequency resources for control/data messages, transmit power, number of repetitions, MCS, and periodicity of message transmission, may be determined by a higher layer signaling (such as RRC or SIB) or may be preconfigured. The UE may autonomously update the resource allocation parameters at the frequency of the geographical information updates based on the mapping provided by the network.

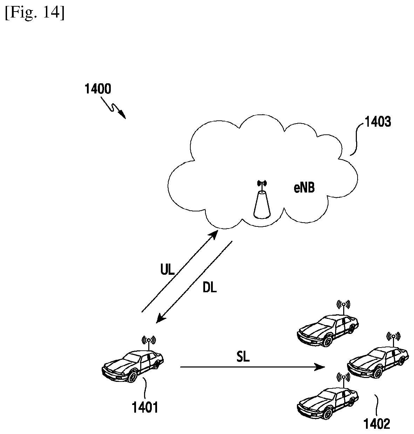

FIG. 14 illustrates an example sidelink (SL) interface 1400 according to embodiments of the present disclosure. An embodiment of the SL interface 1400 shown in FIG. 14 is for illustration only.

While UL designates a link from a UE 401 (such as 111-116 as illustrated in FIG. 1) to an eNodeB 403 (such as 101-103 as illustrated in FIG. 1) and DL designates the reverse direction, SL designates the radio links over PC5 interfaces between the UE 401 and the UEs 402. The UE 401 transmits a V2V message to multiple UEs 402 in the SL. An SL communication happens directly without using E-UTRAN (such as an eNodeB 403) technology and not traversing any network node. The PC5 interface reuses existing frequency allocation, regardless of the duplex mode (such as FDD or TDD).

To minimize hardware impact on a UE and especially on a power amplifier of the UE, transmission of V2V links occurs in a UL band in case of FDD. Similar, the PC5 interface uses SFs that are reserved for a UL transmission in TDD. A signal transmission is based on single carrier frequency division multiple access (SC-FDMA) that is also used for the UL transmission. New channels can be largely based on a channel structure applicable for a transmission of the physical UL shared channel (PUSCH).

A SL transmission and reception occurs with resources assigned to a group of devices. A resource pool (RP) is a set of resources assigned for SL operation. The SL operation consists of subframes and resource blocks within the subframe. For an SL communication, two additional physical channels are introduced (such as PSCCH carrying the control information and PSSCH carrying the data).

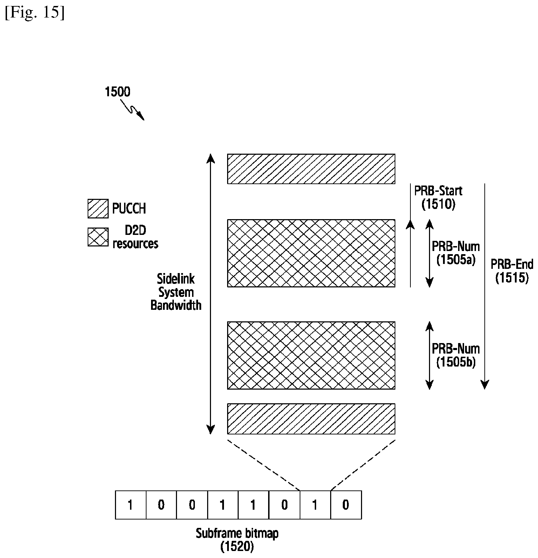

FIG. 15 illustrates an example resource pool 1500 for a physical sidelink control channel (PSCCH) according to embodiments of the present disclosure. An embodiment of the resource pool 1500 for PSCCH shown in FIG. 15 is for illustration only.

The resource pool 1500 as illustrated in FIG. 15 includes two resource domains such as frequency and time domains. The frequency domain comprises PRBnums 1505a, 1505b that define a frequency range in physical resource block (PRB) bandwidth units, and PRBstart 1510 and PRBend 1515 that define a location in the frequency domain within an uplink band. The time domain comprises a subframe bitmap 1520 that indicates 1 millisecond (msec) subframes used for PSCCH transmission. This block of resources is repeated with a period defined by a parameter SC-Period (expressed in subframe duration, i.e. 1msec). The range of possible values for SC-Period is from 40 msec to 320 msec. In one example, low values are supported for voice transmission.

All the parameters needed to define a resource pool are broadcasted in a system information block (SIB) by a network. Devices which are not within coverage (and hence cannot acquire the SIB) may use some pre-configured values internally stored. The PSCCH is used by a D2D transmission communicating with a UE to make members of the D2D's group aware of a next data transmission that will occur on the PSSCH. The D2D transmission communicating with the UE sends sidelink control information (SCI) on the PSCCH as shown in Table 1.

**Table 1**

| **Parameter** | **Usage** |
|---|---|
| Group destination ID | Used by the receiving devices to determine whether the receiving devices have some interest in this announcement. If the identifier does not match, the receiving devices do not need to monitor SL channels until the next SC-Period |
| Modulation and coding scheme | To indicate modulation and coding rate for the data |
| Resource block assignment and hopping resource allocation | Give the receiving devices information about the resources of the PSSCH that they may decode in the frequency domain |
| Frequency hopping flag | |
| Time resource pattern (T-RPT) | Give the receiving devices information about the resources of the PSSCH that they may decode in the time domain |
| Timing advance | |

Devices interested in receiving D2D services can blindly scan the whole PSCCH pool to search if a SCI format matching the devices' group identifier can be detected. On the transmitting device side, resources to transmit the SCI format information may be selected within the PSCCH pool.

Reception resource pools (Rx RPs) and transmission resource pools (Tx RPs) may be defined as resource pool. Rx RPs and Tx RPs may be either signaled by the NodeB for in-coverage case or a pre-configured value is used for the out-of-coverage case. Within a cell, there may be more Rx RPs than Tx RPs to enable reception from adjacent cells or from out-of-coverage UEs.

Two modes of resource allocation are defined for a SL communication (such as mode 1 and mode 2). The mode 1 is referred as scheduled resource allocation and the mode 2 is referred as UE autonomous resource selection. More specifically, in mode 1, access to the SL resources is driven by an eNodeB. In this instance, a UE needs to be connected to transmit data. In one example, the UE wishing to use direct communication feature sends an indication to the network and a temporary identifier is assigned (such as SL radio network temporary identifier (SL-RNTI)). The SL-RNTI may be used by an eNodeB to schedule the future D2D transmission. In another example, when the UE has some data to transmit in a D2D mode, the UE sends a SL-buffer status report (SL-BSR) to the eNodeB which gives an indication on an amount of data to be transmitted in the D2D mode. In such example, the eNodeB sends to the UE the allocation on both PSCCH and PSSCH for the UE's D2D transmission. The allocation information is sent over the PDCCH by sending a DCI format 5, scrambled by the SL-RNTI. The information contained in the DCI format 5 is detailed in Table 2. A large part of the DCI format 5 information is directly reflected in the content of the SCI format 0. Based on the information received in the DCI format 5, the D2D transmitting devices sends the SCI format 0 over the resources within the PSCCH pool allocated by the eNodeB, followed by the data over the resources allocated by the eNodeB for PSSCH transmission.

**TABLE 2**

| **Parameter** | **Usage** |
|---|---|
| Resource for PSCCH | Provides the information of the transmitting UE of the resource to be used for SCI format 0 transmissions within the PSCCH pool. |
| TPC command | If TPC command bit is not set, the transmitting UE is allowed to transmit D2D signals at maximum power. Otherwise, the UE may comply with power control rules based on open loop. |
| Resource block assignment and hopping resource allocation | Give to the receiving devices the information of the resources of the PSSCH that they may decode in the frequency domain |
| Frequency hopping flag | |
| Time resource pattern (T-RPT) | Give to the receiving devices the information of the resources of the PSSCH that they may decode in the time domain |

In mode 1, there is no pre-allocated or reserved resource for PSSCH. For example, "on-demand" by the NodeB is assigned. In addition, since a NodeB is responsible to give access to the resources within the PSCCH pool, collision on the PSCCH transmission can be avoided. In mode 2, the UE transmitting D2D data does not need to be connected to an eNodeB. For example, the UE selects autonomously and randomly the resources within the PSCCH pool to transmit the SCI Format 0.

In addition to the PSCCH pool, there is also a PSSCH pool which defines reserved resources for PSSCH transmission. It is defined in a similar way as the PSCCH pool (such as PRBStart 1510, PRBend 1515, PRBNum 1505 in the frequency domain and a subframe bitmap in the time domain as illustrated in FIG. 15 which are repeated up to the next PSCCH occurrence). The SCI format 0 designates the portion of the pool that is used for D2D transmission. Since the transmitting UE is not necessarily connected to the NodeB, the timing advance information may be not known and the corresponding parameter in the SCI format 0 may be set to 0.

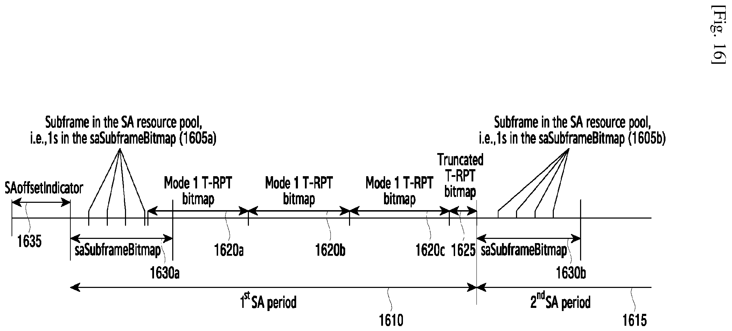

FIG. 16 illustrates an example subframe resource allocation 1600 according to embodiments of the present disclosure. An embodiment of the subframe resource allocation 1600 shown in FIG. 16 is for illustration only.

As illustrated in FIG. 16, the subframe resource allocation 1600 comprises subframes in the SA resource pool 1605a, 1605b, a first SA period 1610, a second SA period 1615, mode 1 T-RPT bitmap 1620a, 1620, 1620c, a truncated T-RPT bitmap 1625, saSubframeBitmaps 1630a, 1630b, and a SAoffsetindicator 1635.

The subframe bitmap illustrated in FIG. 15 is split into two regions, a control region and a data region. The first SC period starts at an offset from SFN=0 and is periodically repeated with a configurable length between 40 msec and 320 msec. It starts with the control region which contains the SCI0 control element carried by the PSCCH. SubframeBitmapSL (such as saSubframeBitmap 1630a, 1630b) indicates subframes used for PSCCH. Directly after the last bit of the SubframeBitmapSL which is set to 1, the data region starts. The SubframeBitmapSL consists of another bitmap, the T-RPT bitmap (such as mode 1 T-RPT bitmap 1620a, 1620b, 1620c), which is a bitmap indicating the subframes which are used for the data transmission. The mode 1 T-RPT bitmaps 1620a, 1620b, 1620c are repeated until the end of the SC Period, where the last occurrence may be truncated. The T-RPT bitmaps 1620a, 1620b, 1620c are dynamic and may therefore be different for each UE and for each SC Period.

To be more precise, the set of all subframes which are allocated for the resource pool is restricted by using a periodic pattern with a periodicity of 8 for FDD, and a shorter one for some TDD configurations. Necessary parameters to determine this bitmap in order to receive the data part are signaled via the PSCCH. For mode 2, this structure is quite similar. The main difference is that start of the data part does not depend on the content of the SubframeBitmapSL, but has a fixed offset from the start of the SC Period. In addition, an algorithm to determine the bitmap pattern is somewhat different and may explicitly exclude some configurations.

Semi-persistent scheduling (SPS) is available for DL/UL communication in LTE, primarily to support voice. Since a PDCCH is limited size (generally, 3 OFDM symbols), there is a limit as to how many DCIs can be carried in a subframe. This can in-turn limits the number of UEs which can receive an allocation for that subframe when using dynamic scheduling (such as 1:1 PDCCH-to-PxSCH scheme). With SPS, the UE is pre-configured by an eNB with an SPS-RNTI (allocation ID) and a periodicity. Once pre-configured, if the UE were to receive an allocation (DL / UL) using the SPS-RNTI (instead of the typical C-RNTI), then this one allocation would repeat according to the pre-configured periodicity. During SPS, certain parameters remain fixed for each allocation, for example, RB assignments, modulation and coding scheme (MCS), etc. If radio link conditions change, a new allocation may be sent (PDCCH).

The SPS can be configured/re-configured by RRC at any time using SPS-Config. The SPS-Config includes a configuration for semiPersistSchedC-RNTI (sps-CRNTI), sps-ConfigDL and sps-ConfigUL. In addition, the SPS can be configured only in the uplink (sps-ConfigUL), or in the downlink (sps-ConfigDL) or in both directions. Configuration of the SPS doesn't mean that the UE can start using SPS grants/assignments. The eNB may explicitly activate the SPS, in order for the UE to use the SPS grants/ assignments. Also, to avoid wasting resources when a data transfer is completed, there are several mechanisms for deactivating the SPS (explicit, inactivity timer, etc.). When configuring SPS in any direction either UL or DL, SPS C-RNTI is mandatorily provided by the eNB. Soon after the UE is configured with SPS C-RNTI, the UE is configured by higher layers to decode PDCCH with CRC scrambled by the SPS C-RNTI. A UE shall monitor PDCCH with CRC scrambled by the SPS C-RNTI in every subframe as the eNB can activate/re-activate/release SPS at any time using DCI. The SPS is not supported in a SL communication.

In some embodiments, there is a requirement for V2X communication that for particular usage (such as pre-crash sensing) only, the E-UTRA(N) may be capable of transferring V2X messages between two UEs supporting V2V service with a maximum latency of 20 msec. In D2D communication, a scheduling assignment (SA) sent in PSCCH and data sent in PSSCH are time multiplexed in separate pools. The shortest SC period is 40 msec, which does not meet the requirement for V2V. The SA and associated data transmission may be transmitted in the same subframe for the V2V communication so as to satisfy the latency requirement.

In some embodiments, there is a requirement for V2X communication that the E-UTRA(N) may be able to support a high density of UEs supporting V2X service. There is also a requirement that the E-UTRA(N) may be capable of transferring periodic broadcast messages between two UEs supporting V2X services with variable message payloads of 50-300 bytes, not including security-related message component. For many V2V data services, the message sizes are small and the inter-arrival time of transmission is constant (such as the CAM messages are periodic with frequency of 1-10 Hz). The control signaling overhead (PSCCH) can be significant in order to support a large number of vehicles. So, it is important to allocate the resources at once and let the vehicle use these resources instead of re-allocating the resources periodically. To support this efficiently, semi-persistent scheduling support is desirable for the V2V communication using SL.

In some embodiments, a resource pool design in D2D communication assumes a half-duplex constraint so that a device can receive the other UE transmissions while the device is transmitting data. This is not necessary to support for V2X for some pools such as emergency communication since a decentralized environmental notification message (DENM) messages are directed towards the receiving devices to act upon the message rather than any action to be taken from the device transmitting the emergency information.

In some embodiments, there is a requirement for V2X communication that the 3GPP system may be able to vary the transmission rate and coverage area based on service conditions (such as UE speed, UE density). There is also a requirement that the 3GPP network may be able to provide means to prioritize transmission of V2X messages according to their type (such as safety vs. non-safety). Hence, there may be a need to define multiple resource pools for V2V based on message types, traffic density, location, direction of traffic, etc. which affect the communication operation of the vehicle and are requirements unique to V2V communication.

In some embodiments, since low latency is a critical feature for V2V communication, the current D2D structure where the PSCCH and PSSCH are scheduled across multiple subframes in separate resource pools and are time-multiplexed cannot meet the requirements for the V2V communication. Therefore, resource pool designs for fast resource allocation may be necessary to support for semi-persistent scheduling for periodic traffic and support for scheduling emergency DENM event-triggered traffic.

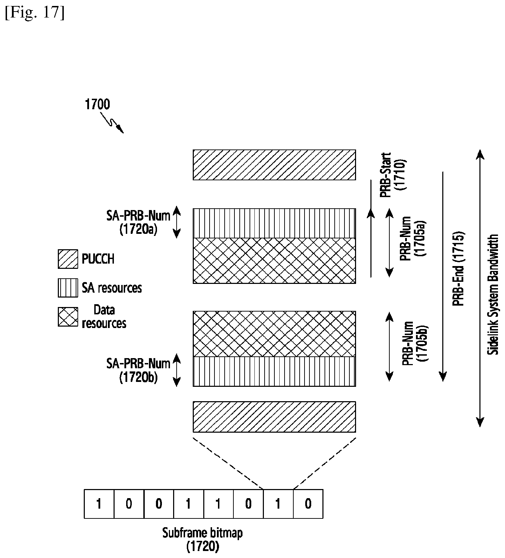

FIG. 17 illustrates an example resource pool 1700 using an FDM of SA and data 1700 according to embodiments of the present disclosure. An embodiment of the resource pool 1700 using FDM of SA and data shown in FIG. 17 is for illustration only.

The resource pool 1700 as illustrated in FIG. 17 includes two resource domains, frequency and time domain. The frequency domain comprises PRBnums 1705a, 1705b that define a frequency range in physical resource block (PRB) bandwidth units, and PRBstart 1710 and PRBend 1715 that define a location in the frequency domain within an uplink band. A time domain comprises a subframe bitmap 1720 that indicates 1msec subframes used for PSCCH transmission. This block of resources is repeated with a period defined by a parameter SC-Period (expressed in subframe duration, i.e. 1msec). The range of possible values for SC-Period is from 40 msec to 320 msec.

In one example, low values are supported for voice transmission. SA-PRBnums 1720a, 1720b define the frequency range in PRB bandwidth units that is assigned for SA (PSCCH) transmission and reception. The SA-PRBnums 1720a, 1720b are less than or equal to the PRBnum 1705a, 1705b. The frequency bands are defined starting from the PRBstart 1710 or PRBend 1715, depending on which of the two bands are in use in the current slot. A bitmap in a time domain indicates the 1msec subframes (such as subframe bitmap 1720) used for PSCCH and PSSCH transmissions. The resources pool 1700 is repeated with a period defined by a parameter SC-Period (expressed in subframe duration, i.e. 1msec). The range of possible values for SC-Period is from 10 msec to 320 msec. In one example, low values are supported for event-triggered transmission of emergency messages.

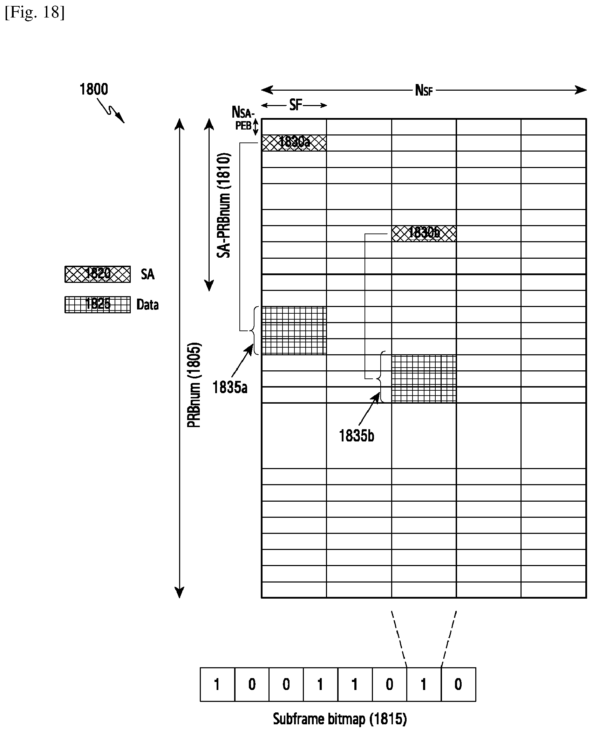

FIG. 18 illustrates an example resource pool 1800 using an FDM of SA and data on separate physical channels according to embodiments of the present disclosure. An embodiment of the resource pool 1800 using FDM of SA and data on separate physical channels shown in FIG. 18 is for illustration only.

As illustrated in FIG. 18, the resource pool 1800 comprises a PRBnum 1805, a SA-PRBnum 1810, a subframe bitmap 1815, SA 1820, and data 1825. The SA 1820 and data 1825 are orthogonal in a frequency domain (such as separate without any overlap). The orthogonality helps a receiver to look for the SA 1820 in a particular location without having to search through the entire band. The resources used for each SA transmissions 1830a, 1830b, are fixed in frequency. The resource location for the SA transmissions 1830a, 1830b of each UE within the resource pool 1800 is indicated by an eNodeB in a DCI format. The SA transmissions 1830a, 1830b may be repeated multiple times within the resource pool 1800 to provide improved reliability. The repetition information can be implicitly obtained from the location of the first transmission indicated by the eNodeB. The SA 1820 contains explicit information about the frequency location of data transmission(s) 1825 to provide increased flexibility for scheduling resources. This is required since the message can be of variable size and may use variable modulation and coding rates, which makes the amount of resources used in frequency variable. The data 1825 can be composed of multiple duplicate transport blocks (such as 1835a, 1835b) for increased reliability. Thus, PSSCH and PSCCH are transmitted simultaneously with separate DFT precoding within the same subframe bitmap 1815 and are not contiguous in frequency.

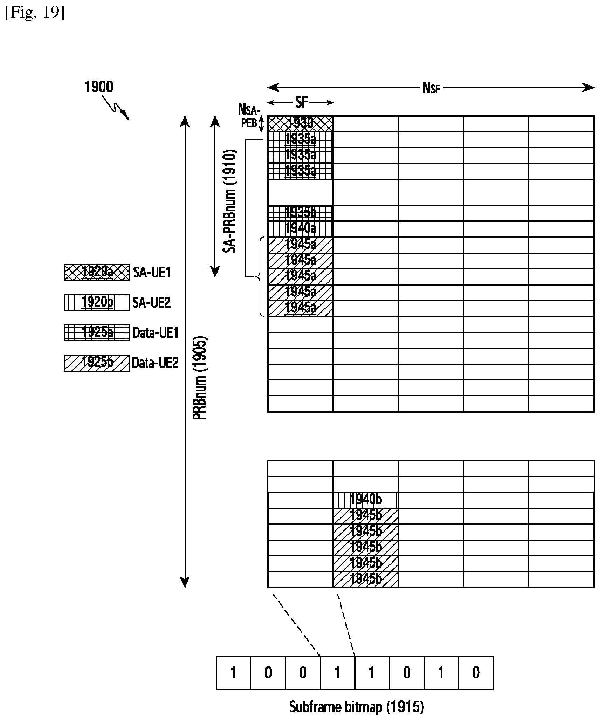

FIG. 19 illustrates an example resource pool 1900 using an FDM of SA and data on separate physical channels with a single discrete fourier transform (DFT) precoding according to embodiments of the present disclosure. An embodiment of the resource pool 1900 using FDM of SA and data on separate physical channels with a single discrete fourier transform (DFT) precoding shown in FIG. 19 is for illustration only.

As illustrated in FIG. 19, the resource pool 1900 comprises a PRBnum 1905, a sub-PRBnum 1910, a subframe bitmap 1915, an SA-UE 1 1920a, an SA-UE 2 1920b, a Data-UE 1 1925a, a Data-UE 2 1925b, an SA-UE 1 transmission 1930, Data-UEl transmissions 1935a, 1935b, SA-UE 2 transmissions 1940a, 1940b, Data-UE2 transmissions 1945a, 1945b.

As illustrated in FIG. 19, the PRBnum 1905 defines a frequency range in PRB bandwidth units, the sub-PRBnum 1910 defines the frequency range in the PRB bandwidth units that is assigned for both SA (such as SA-UE 1 1920a, SA-UE 2 1920b on PSCCH) and data (such as Data-UE 1 1925a and Data-UE 2 1925b on PSSCH) transmissions and receptions. The sub-PRBnum 1910 is less than or equal to the PRBnum 1905 and is an integer multiple (such as the PRBnum 1905 = k^{∗}Sub-PRBNum 1910, where k is an integer >= 1). The data (such as the Data-UE 1 1925a and Data-UE 2 1925b) is rate-matched to fill the entire sub-PRBnum 1910 frequency locations. The subframe bitmap 1915 in the time domain indicates the 1msec subframes used for PSCCH and PSSCH transmissions.

The SA and data resources overlap in a frequency domain but the SA only occurs in fixed locations within the allocation. This helps the receiver to look for each of the SA in a particular location without having to search through the entire band. The resource used for each of SA transmissions 1930, 1940a, 1940b is fixed in frequency. The resource location for transmission of each UE within the resource pool 1900 is indicated by an eNodeB in a DCI format. The SA transmissions 1930, 1940a, 1940b may be repeated multiple times within the resource pool to provide improved reliability. The repetition information can be implicitly obtained from the location of the first transmission indicated by the eNodeB. The data transmissions 1935a, 1935b, 1945a, 1945b immediately follow the SA transmissions 1930, 1940a, 1940b in the frequency domain (such as the SA 1920a, 1920b and data 1925a, 1925b are contiguous in frequency). Since the message can be of variable size and may use variable modulation and coding rates, which makes the amount of resources used in frequency variable, rate matching is employed to fill in the entire frequency contents of the Sub-PRBNum 1910. The data 1925a, 1925b can be composed of multiple duplicate transport blocks for increased reliability. Thus, PSSCH and PSCCH are transmitted simultaneously within the same subframe and are contiguous in frequency.

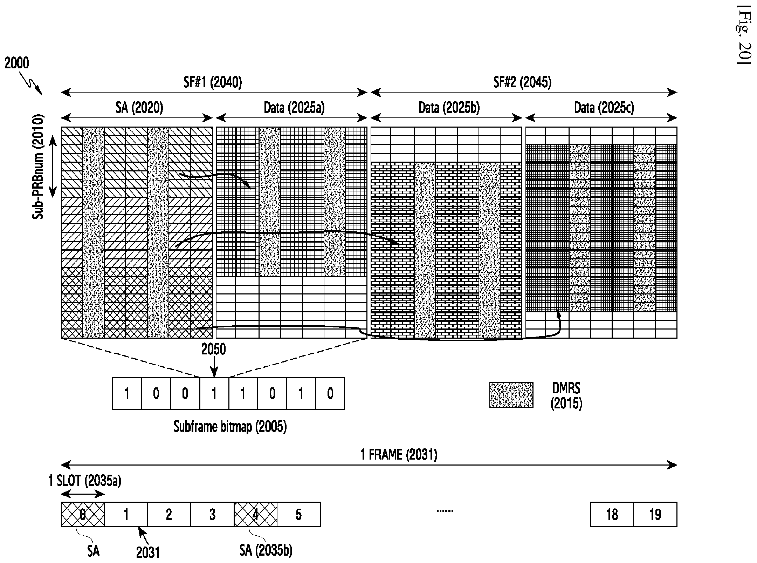

FIG. 20 illustrate an example resource pool 2000 using a time division multiplexing (TDM) of SA and data on separate physical channels within the same subframe according to illustrative embodiments of the current disclosure. An embodiment of the resource pool 2000 using TDM of SA and data on separate physical channels within the same subframe shown in FIG. 20 is for illustration only.

As illustrated in FIG. 20, the resource pool 2000 comprises a subframe bitmap 2005, a sub-PRBnum 2010, a DMRS 2015, SA 2020, 2035a, 2035b, data 2025a, 2025b, 2025c, and a frame 2031. The sub-PRBnum 2010 defines a frequency range in PRB bandwidth units that is assigned for the SA 2020, 2035a, 2035b transmission and reception on PSCCH. The sub-PRBnum 2010 is less than or equal to a PRBnum and is an integer multiple (such as PRBnum = k^{∗}Sub-PRBNum, where k is an integer >= 1). The bitmap 2005 (such as subframe bitmap) indicates 1msec subframes used for PSCCH and PSSCH transmissions.

The SA 2020 and data resources 2025a, 2025b, 2025c are time-multiplexed in certain subframes (such as bitmap 2005) but the SA 2020 only occurs in fixed locations within the allocation. This SA 2020 allocation helps a receiver to look for the SA 2020 in a particular location without having to search through the entire band. The resource used for each SA transmission 2020 is fixed in a frequency domain. The resource location for transmission of each UE within the resource pool 2000 is indicated by an eNodeB in a DCI format. The SA transmission 2020 may be repeated multiple times across the subframes bitmap 2005 within the resource pool 2000 to provide improved reliability.

The repetition information can be implicitly obtained from the location of the first transmission indicated by the eNodeB. The location of the data 2025a, 2025b, 2025c in the time and frequency domain is indicated by the SA transmission 2020. The data 2025a, 2025b, 2025c can be composed of multiple duplicate transport blocks for increased reliability. High priority or emergency traffic can be scheduled in the same subframe while regular traffic can be scheduled in future subframes. The SA 2020 may not be carried in every subframe bitmap 2005.

In one embodiment, the entire slot of periodic traffic 2305a of the subframe bitmap 2005 can be used for the SA transmission 2020. As shown in FIG. 20A, the SA 2020 can occupy the 1^{st} slot in an SF#1 2040 and can schedule data in the SF#1 2040. The entire SF#2 2045 can be used for data transmissions 2025b, 2025c. The SFs 2040, 2045 that can be used for the SA transmission 2020 are predetermined and are known to a receiver. As shown in FIG. 20A, every fourth slot 2050 in the subframe bitmap 2005, for example, can be assigned for the SA transmission 2020, while the remaining slots can be used for the data transmissions 2025a, 2025b, 2025c. Each slot has 2 DMRS symbols 2015 and is sufficient to be decoded independently.

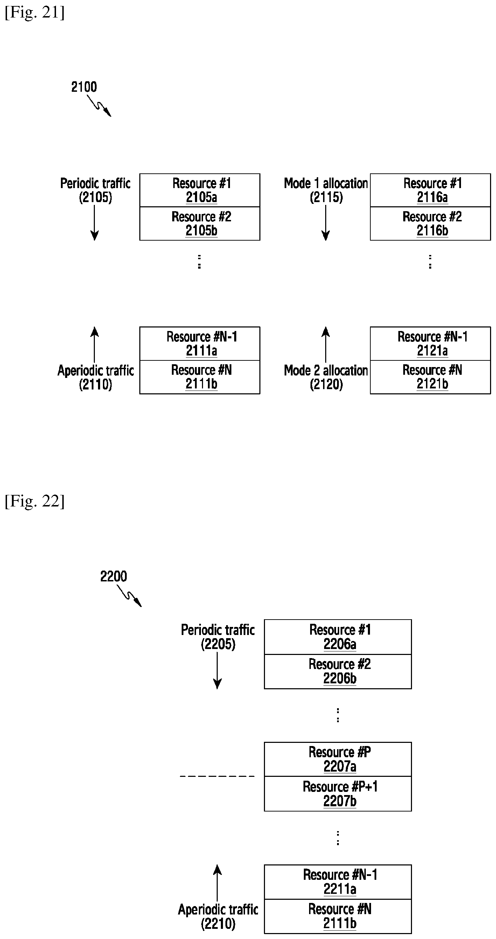

FIG. 21 illustrates an example resource pool 2100 for periodic and aperiodic traffics, and mode 1 and mode 2 allocations according to embodiments of the present disclosure. An embodiment of the resource pool 2100 for the periodic and aperiodic traffics, and the mode 1 and mode 2 resource pool 2100 shown in FIG. 21 is for illustration only.

As illustrated in FIG. 21, when there are insufficient frequency resources (such as multiple pools may not be available), the resource pool 2100 can be shared, for example, between periodic and aperiodic traffics or between mode 1 and mode 2 devices. As illustrated in FIG. 21, the resource pool 2100 comprises a periodic traffic 2105, an aperiodic traffic 2110, a mode 1 allocation 2115, and a mode 2 allocation 2120. More specifically, the periodic traffic 2105 comprises a set of resources 2105a, 2105b (such as resource #1 and #2), the aperiodic traffic 2110 comprises a set of resources 2111a, 2111b (such as resource #N-1 and #N), the mode 1 allocation comprises a set of resources 2116a, 2116b (such as resource #1 and #2), and the mode 2 allocation comprises a set of resources 2121a, 2121b (such as resource #N-1 and #N).

The periodic traffic 2105 and the aperiodic traffic 2110, or the mode 1 allocation 2115 and the mode2 allocation 2120 first select resources according to an ordered list within regions of the resource pool defined for the traffic (such as periodic traffic or aperiodic traffic) or mode allocation and then select resources based on the ordered list from other regions. For example, the periodic traffic 2105 and the aperiodic traffic 2110, or the mode 1 allocation 2115 and the mode2 allocation 2120 can occur from opposite sides of the resource pool 2100. The available resources (such as 2105a, 2105b, 2111a, 2111b, 2116a, 2116b, 2121a, 2121b) for UEs are defined as a list of time/frequency locations (such as resource list). The resource list is prioritized, for example, the mode 1 allocation 2115 may use the resource #1 2116a before using the resource #2 2116b and so on. Similarly, the mode 1 allocation 2115 and the mode 2 allocation 2120 may use the resource #N 2121b before using the resource #N-1 2121a and so on. Therefore, flexibility may be provided in the pool allocation while minimizing pool fragmentation. The eNodeB can configure the UE, during RRC configuration for example, whether resource pools can be shared or kept exclusive. In one embodiment, the mode 1 allocation 2115 and the mode 2 allocation 2120 share the resource pool 2100, the mode 2 allocation 2120 is no longer random. The UE using the mode 2 2120 firstly senses a channel and investigates the resources pool 2100 available for the UE's SA transmission. The UE selects the first available resource in a priority list for the SA transmission. If all resources are used in the mode 2 allocation 2120, the UE does not transmit but waits for the next available opportunity.

FIG. 22 illustrates an example resource pool structure 2200 for periodic and aperiodic traffics allocation with partitioning information according to embodiments of the present disclosure. An embodiment of the resource pool structure 2200 for the periodic and aperiodic traffics allocation with partitioning information shown in FIG. 22 is for illustration only.

As illustrated in FIG. 22, the resource pool 2200 comprises a periodic traffic 2205 and an aperiodic traffic 2210. More specifically, the periodic traffic 2205 comprises a set of resources 2206a, 2206b, 2207a (such as resource #1, #2, and #P) and the aperiodic traffic 2210 comprises a set of resources 2207b, 2211a, 2211b (such as resource#P+1, #N-1 and #N). As illustrated in FIG. 22, the resource pool 2200 could be semi-statically partitioned. Partitioning information could be configured by an eNB. The periodic traffic 2205 is allocated from one direction up to a resource #P 2207a. However, to use the resources from #P+1 2207b that are allocated for the aperiodic traffic 2210, there is a penalty associated with such use.

In one example for penalty, in order to use the resources from resource #P+1 2207b to resource #N 2211b, the UE may reduce the UE's transmission power. In such example, a power reduction may be constant for all the resources 2207b, 2211a, 2211b allocated to the aperiodic traffic 2210 or may increase with increased use of resources (such as increased penalty with increased use of resources allocated to aperiodic traffic 2210). Thus, a probability of the periodic traffic transmission (such as 2205) impacting the aperiodic traffic transmission (such as 2210) is reduced. On the other hand, the aperiodic traffic 2210 may use a fixed power (such as maximum power) even if the aperiodic traffic 2210 uses resources allocated for the periodic traffic 2205, for example, the resources #1 2206a to the resource #P 2207a due to low latency and critical safety requirements.

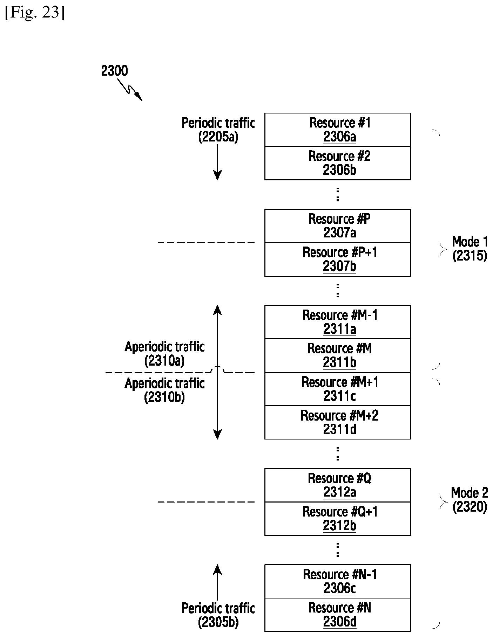

FIG. 23 illustrates an example mode 1 and mode 2 sharing the same resource pool 2300 according to embodiments of the present disclosure. An embodiment of the mode 1 and mode 2 sharing the same resource pool 2300 shown in FIG. 23 is for illustration only.

As illustrated in FIG. 23, the resource pool 2300 comprises periodic traffics 2405a, 2305b, aperiodic traffics 2310a, 2310b, a mode 1 2315, and a mode 2 2320. More specifically, the periodic traffic 2305 comprises a set of resources 2306a, 2306b, 2307a (such as resource #1, #2, and #P), the aperiodic traffic 2310a comprises a set resources 2307b, 2311a, 2311b (such as resource #P+1, #M-1, #M), the aperiodic traffic 2310b comprises a set of resources 2311c, 2311d, 2312a (such as resource #M+1, #M+2, and #Q), the periodic traffic 2305b comprises a set of resources 2312b, 2306c, 2306d (such as resource #Q+1, #N-1, and #N). Furthermore, the mode 1 2315 comprises the periodic traffic 2305a and the aperiodic traffic 2310a, and the mode 2 2320 comprises the periodic traffic 2305b and the aperiodic traffic 2310b.

As illustrated in FIG. 23, the mode 1 2315 and the mode 2 2320 share the same resource pool 2300 with the periodic traffics 2305a, 2305b and the aperiodic traffics 2310b, 2405b in the resource pool 2300. The resources #1 2306a to the resource #P 2307a and the resource #Q 2312a to the resource #N 2306d could be assigned for the periodic traffics 2305a, 2305b while the resources #P+1 2307b to the resource #Q 2312a can be assigned for the aperiodic traffics 2310a, 2310b. The resource allocations are all done on a circular list. For example, if the aperiodic traffic 2310a for the mode 1 2315 starts at the resource #M 231 1b and reaches the resource #1 2306a, the aperiodic traffic 2310a wraps around to use the resource #N 2306d, the resource #N-1 2306c.

Due to a need to support periodic messages, it can be more efficient for the eNodeB to assign a periodic schedule for a transmission rather than having to send multiple DCI format for each SC period for a mode 1 operation. Thus, a UE can be configured to support SPS or semi-persistent transmissions for both unicast and sidelink transmissions. The SPS-periodicity and SPS-RNTI for an SL can be configured by the eNodeB using RRC signal using SPS-Config. This SPS-Config is enhanced to additionally include a configuration for semiPersistSched-SL-RNTI (sps-SL-RNTI) and sps-ConfigSL. If SL-SPS is enabled, PSCCH can be scrambled with the SPS-SL-RNTI for the SPS. After the UE is configured with the SPS SL-RNTI, the UE is configured by higher layers to decode the PSCCH with CRC scrambled by the SPS-SL-RNTI. A UE may monitor the PSCCH with the CRC scrambled by the SPS-SL-RNTI in every subframe as the eNB can activate/re-activate/release the SPS at any time using the DCI.

Once the SPS is configured and enabled by the eNodeB, the SPS information is transmitted in an SCI format in the PSCCH and the PSCCH is not transmitted during future repetitions until a periodicity of the SPS expired. The receiving UEs use the same configuration as provided in the initial PSCCH for future data receptions. An MCS, data resource size and other parameters are not modified during the repetitions.

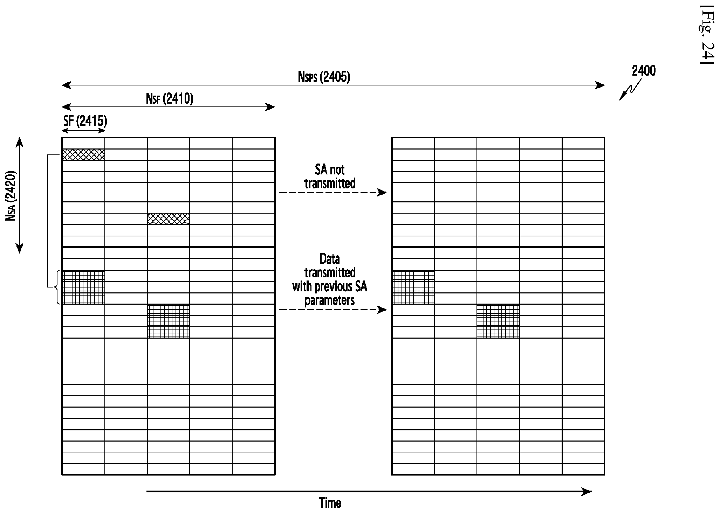

FIG. 24 illustrates an example semi-persistent scheduling 2400 using an FDM of SA and data on separate physical channels within the same subframe according to embodiments of the present disclosure. An embodiment of the semi-persistent scheduling 2400 using FDM of SA and data on separate physical channels within the same subframe shown in FIG. 24 is for illustration only.

As illustrated in FIG. 24, the semi-persistent scheduling (SPS) (such as semi-persistent transmissions) 2400 comprises an Nsps 2405, an Nsf 2410, an SF 2415, and an Nsa2420. More specifically, the Nsps 2405 is a periodicity comprising a number of subframes during which an SA is not transmitted. The Nsf 2410 comprises a number of subframes and the SF 2415 presents a subframe. Data is transmitted with a configuration from the first PSCCH and SA transmission. Since the SA is not transmitted, a transmit power for the data portion can now be increased during the SPS period (such as Nsps 2405) to keep the same average power.

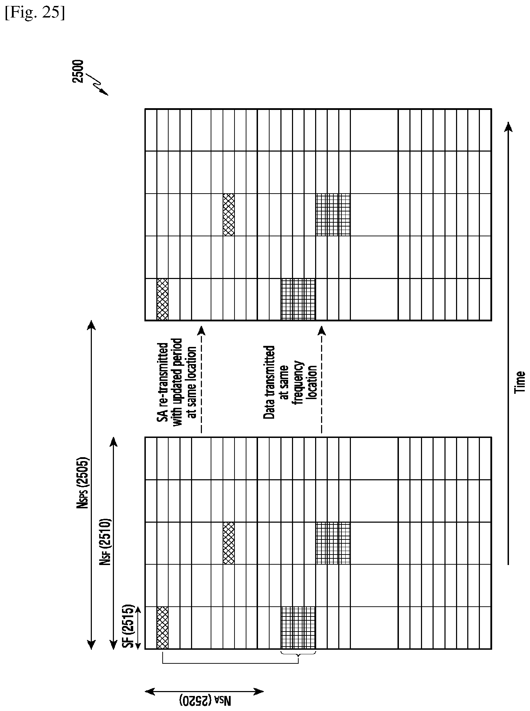

FIG. 25 illustrates an example SA retransmission 2500 with data for a semi-persistent transmission according to embodiments of the present disclosure. An embodiment of the SA retransmission 2500 with data for the semi-persistent transmission shown in FIG. 25 is for illustration only.

As illustrated in FIG. 25, the retransmission 2500 comprises an Nsps 2505, an Nsf 2510, an SF 2515, and an Nsa2520. More specifically, the Nsps 2505 is a periodicity comprising a number of subframes during which an SA is not transmitted. The Nsf 2510 comprises a number of subframes and the SF 2515 presents a subframe.

As illustrated in FIG. 25, the SA is re-transmitted along with data for the semi-persistent transmissions. Therefore, UEs may not have heard the first SA transmission for a mode 2 operation, and avoid a collision. Time/frequency locations of the SA and data are kept consistent among the repetitions. However, in this case, the contents of the SA are modified to reflect a reduced period for which the SA is now valid. Note that the contents of the data are modified every transmission but the MCS and transport block size is kept the same. For example, if the SA is planned to be re-transmitted for semi-persistent transmissions, a number of repetitions, N, is sent as part of the SA contents in the first transmission. The number of repetitions is then decremented every repetition in the SA. Thus, the UEs decoding of the SA can figure out the remaining period for which the semi-persistent transmission is valid and can exclude the remaining period for collision avoidance. The semi-persistent transmission can be aborted by the UE if there is a significant change in the resource pool when reading the SA of other UEs (such as new UEs enter the resource pool). In addition, the UE may skip a transmission if the UE does not have any data to send at that time.

In one embodiment, separate pools can be configured for event triggered traffic to minimize interference. The separate pools are configured with a very small amount of resources for SA and data. The commTxPoolExceptional field in SIB 18 can be re-used for DENM messages for V2V. For the DENM messages, there is no need to support a half-duplex constraint. Every subframe can be used for transmitting an emergency message repeatedly and the separate pools are configured with a very small SA period (10 msec) to meet the 20 msec latency requirement. The DENM messages can be transmitted at maximum transmit power and at the lowest coding rate to improve reliability further. If the UE under an emergency status has other resource pools available for transmission which have reduced interference, the UE can send the event-triggered traffic on those pools as well.

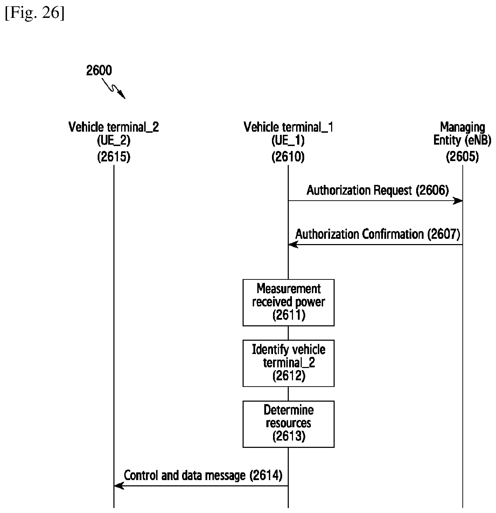

FIG. 26 illustrates an example signaling flow 2600 for a vehicle-to-everything (V2X) communication according to embodiments of the present disclosure. An embodiment of the signaling flow 2600 for the V2X communication shown in FIG. 26 is for illustration only.

As illustrated in FIG. 26, the signaling flow 2600 comprises a managing entity 2605 (such as eNB), a vehicle terminal_1 2610 (such as UE_1), and a vehicle terminal_2 (such as UE_2). At step 2606, the vehicle terminal_1 2610 may transmit an authorization request message to the managing entity 2605. The managing entity 2605 may transmit, at step 2607, an authorization confirmation message in corresponding to the authorization request message received from the vehicle terminal_2 2610 at step 2606. The authorization request message may request for an authorization to perform the V2X communication.

The authorization confirmation message transmitted from the managing entity 2605, at step 2607, may include the authorization for the vehicle terminal_1 2610 and at least one of security keys, device identifiers (IDs), or group IDs for the vehicle terminal_1 2610 to perform the V2X communication. In addition, the authorization confirmation message may further include at least one of network-specific information or location-specific information. More specifically, the network-specific information may include at least one of a public land mobile network identifier (ID), a vehicle-to-vehicle server connection ID, a primary cell ID, or a broadcast ID.

When the vehicle terminal_1 2610 receives, from the managing entity 2605, the authorization confirmation message at step 2607, the vehicle terminal_1 2610 may perform measurement procedure to identify a location of the vehicle terminal_2 2615, at step 2611, based on power received from the vehicle terminal_2 2615.

At step 2612, the vehicle terminal_1 2610 may identify the vehicle terminal_2 2615 to establish a V2X communication link (such as sidelink) to transmit a plurality of message comprising control and data messages. At step 2613, the vehicle terminal_1 2610 may determine, based on receipt of the authorization confirmation message at step 2607, multiple resource pools to transmit the plurality of messages to the vehicle terminal_2 2615. The multiple resource pools may include event-triggered traffic pools and periodic traffic pools. In some embodiment, the multiple resource pools may be allocated to the control and data messages in accordance with at least one of a time domain or a frequency domain over a subframe. More specifically, the control message may include scheduling information associated with the data message based on a semi-persistent scheduling technique.

In some embodiments, the vehicle terminal_1 2610 may determine a single resource pool to transmit the plurality of messages to the vehicle terminal_2 2615. The single resource pool is dynamically partitioned into first resource pools for the control messages and second resource pools for the data messages in a frequency domain over a subframe.

In some embodiments, the vehicle terminal_1 2610 may determine a single resource pool to transmit the plurality of messages to the vehicle terminal_2 2615. The single resource pool is semi-statically partitioned into first resource pools for the control messages and second resource pools for the data messages in a frequency domain over a subframe.

At step 2614, the vehicle terminal_1 2610 may transmit the control and data message to the vehicle terminal_2 2615 using the multiple resource pools. In some embodiments, the plurality of messages is transmitted in the dynamically partitioned single resource pool over a sidelink that is a direct link between the vehicle terminal_1 2610 and the vehicle terminal_2 2615.

In some embodiments, at step 2614, the vehicle terminal_1 2610 may transmit the plurality of message to the vehicle terminal_2 2615 in the semi-statically partitioned single resource pool over the sidelink that is a direct link between the vehicle terminal_1 2610 and the vehicle terminal_2 2615.

In some embodiments, at step 2614, the vehicle terminal_1 2610 may perform resource selection to transmit the plurality of messages to the at least one second UE based on periodic or aperiodic traffic. In one example, for the aperiodic traffic, the vehicle terminal_1 2610 first selects aperiodic resources according to an order list in the at least one of the multiple dedicated or shared resource pools and then selects periodic resources after selecting the aperiodic traffic in the aperiodic resources. In another example, for the periodic traffic, vehicle terminal_1 2610 first selects periodic resources according to the order list in the at least one of the multiple dedicated or shared resource pools and then select aperiodic resources after selecting the periodic traffic in the periodic resources.

In some embodiments, at step 2614, the vehicle terminal_1 2610 performs resource pools selection to transmit the plurality of messages to the at least one second UE. In such embodiments, the selected resource pools are semi-statically partitioned for the at least one of the periodic or aperiodic traffic and the aperiodic traffic uses the selected resource pools that is selected for the periodic traffic without penalty if there is no aperiodic traffic resource pool available while the periodic traffic is penalized to use the aperiodic traffic resources.

In some embodiments, at step 2614, the vehicle terminal_1 2610 performs resource pools selection to transmit the plurality of messages to the at least one second UE based on at least one of a first mode or a second mode operations. In such embodiments, the resource pools for the first mode and the second mode operations are selected from opposite ends of a shared resource pool.

The scope of patented subject matter is defined only by the claims.

## Claims

1. A method for operating a first user equipment, UE (UE_1), in a wireless vehicular communication network, method comprising:
determining (2613) at least one of multiple resource pools comprising time and frequency resources to transmit a plurality of messages including control and data messages to at least one second UE (UE_2), wherein the plurality of messages comprise event-triggered aperiodic traffic or periodic traffic and the at least one of the multiple resource pools comprises a shared resource pool, and wherein multiple traffic types or priorities are multiplexed in the at least one of the multiple resource pools;
dynamically adjusting a resource selection within the multiple resource pools based on resource selection criteria; and
directly communicating (2614) the plurality of messages to the at least one second UE using the at least one of the multiple resource pools,
wherein the directly communicating of the plurality of messages to the at least one second UE using the at least one of the multiple resource pools comprises:
identifying resources in the shared resource pool, the resources comprising a first resource set for traffic of first type and a second resource set for traffic of second type;
determining at least one resource for transmitting the traffic of first type among the first resource set according to a priority order of the resources in the shared resource pool; and
if the first resource set is unavailable in the shared resource pool, determining at least one additional resource for transmitting the traffic of first type among the second resource set according to the priority order of the resources in the shared resource pool, wherein the two types of traffic are event-triggered aperiodic traffic and periodic traffic.

2. The method of claim 1, wherein the resources are shared between vehicle-to-vehicle, V2V, and device-to-device, D2D, communication networks.

3. The method of claim 1, further comprising applying different time and frequency domain allocation, a transmission power, and sensing thresholds to the multiple traffic types or priorities multiplexed in the at least one of the multiple resource pools.

4. The method of claim 1, wherein the at least one of the multiple resource pools are selected based on the resource selection criteria that includes at least one of geographical location information of the at least one second UE, a size of resource pool, a vehicular speed, or a type of traffic including periodic and aperiodic traffic.

5. The method of claim 1, further comprising measuring power received from the at least one second UE based on at least one of a power threshold, an average power, or a distribution of the measured power to identify a location of the at least one second UE.

6. The method of claim 1, wherein:
determining at least one of the multiple resource pools comprises determining a single resource pool to transmit the plurality of messages to the at least one second UE,
wherein the single resource pool is shared for data resources for periodic and event triggered traffic but resource pools are separate for control resources for the periodic and event triggered traffic.

7. The method of claim 1, wherein:
determining at least one of the multiple resource pools comprises determining a single resource pool to transmit the plurality of messages to the at least one second UE, and
the single resource pool is semi-statically partitioned for the control and data messages.

8. The method of claim 1, wherein the traffic of first type is one of periodic traffic and aperiodic traffic, and the traffic of second type is the other one of the periodic traffic and the aperiodic traffic.

9. The method of claim 8, further comprising:
transmitting the plurality of messages to the at least one second UE, the shared resource pool being semi-statically partitioned for the periodic traffic or the aperiodic traffic,
wherein the aperiodic traffic is allowed to use periodic traffic resources in the shared resource pool without a penalty if there are no aperiodic traffic resources available while the periodic traffic is penalized for use of the aperiodic traffic resources within the shared resource pool.

10. The method of claim 1, wherein the traffic of first type is traffic for mode 1 operation, and the traffic of second type is traffic for mode 2 operation.

11. The method of claim 1, wherein the resources are partitioned according to partitioning information, and
wherein the partitioning information is configured by an evolved node B, eNB.

12. A user equipment, UE (UE_1), arranged to implement one of method of claims 1 to 11.

## Patentansprüche

1. Verfahren zum Betreiben eines ersten Benutzergeräts, UE (UE_1), in einem drahtlosen Fahrzeugkommunikationsnetzwerk, wobei das Verfahren Folgendes umfasst:
Bestimmen (2613) von mindestens einem von mehreren Ressourcenpools, die Zeit- und Frequenzressourcen umfassen, um mehrere Nachrichten, einschließlich Steuer- und Datennachrichten, an mindestens ein zweites UE (UE_2) zu übertragen,
wobei die mehreren Nachrichten ereignisbedingten aperiodischen Verkehr oder periodischen Verkehr umfassen und der mindestens eine der mehreren Ressourcenpools einen gemeinsam genutzten Ressourcenpool umfasst, und wobei mehrere Verkehrstypen oder Prioritäten in mindestens einem der mehreren Ressourcenpools gemultiplext sind;
dynamisches Anpassen einer Ressourcenauswahl innerhalb der mehreren Ressourcenpools basierend auf Ressourcenauswahlkriterien; und
direktes Kommunizieren (2614) der mehreren Nachrichten an das mindestens eine zweite UE unter Verwendung des mindestens einen der mehreren Ressourcenpools,
wobei das direkte Kommunizieren der mehreren Nachrichten an das mindestens eine zweite UE unter Verwendung des mindestens einen der mehreren Ressourcenpools Folgendes umfasst:
Identifizieren von Ressourcen in dem gemeinsam genutzten Ressourcenpool, wobei die Ressourcen einen ersten Ressourcensatz für Verkehr des ersten Typs und einen zweiten Ressourcensatz für Verkehr des zweiten Typs umfassen;
Bestimmen mindestens einer Ressource zum Übertragen des Verkehrs des ersten Typs unter dem ersten Ressourcensatz gemäß einer Prioritätsreihenfolge der Ressourcen in dem gemeinsam genutzten Ressourcenpool;
und
wenn der erste Ressourcensatz im gemeinsam genutzten Ressourcenpool nicht verfügbar ist, Bestimmen mindestens einer zusätzlichen Ressource zum Übertragen des Verkehrs des ersten Typs unter dem zweiten Ressourcensatz gemäß der Prioritätsreihenfolge der Ressourcen in dem gemeinsam genutzten Ressourcenpool,
wobei die zwei Verkehrstypen ereignisbedingter aperiodischer Verkehr und periodischer Verkehr sind.

2. Verfahren nach Anspruch 1, wobei die Ressourcen zwischen Vehicle-to-Vehicle(V2V)- und Device-to-Device(D2D)-Kommunikationsnetzwerken gemeinsam genutzt werden.

3. Verfahren nach Anspruch 1, ferner umfassend das Anwenden einer unterschiedlichen Zeit- und Frequenzdomänenzuweisung, einer Übertragungsleistung und Erfassungsschwellenwerten auf die mehreren Verkehrstypen oder Prioritäten, die in dem mindestens einen der mehreren Ressourcenpools gemultiplext sind.

4. Verfahren nach Anspruch 1, wobei der mindestens eine der mehreren Ressourcenpools basierend auf den Ressourcenauswahlkriterien ausgewählt wird, die geografische Standortinformationen des mindestens einen zweiten UE, eine Größe des Ressourcenpools, eine Fahrzeuggeschwindigkeit und/oder einen Verkehrstyp, einschließlich periodischem und aperiodischem Verkehr einschließen.

5. Verfahren nach Anspruch 1, ferner umfassend das Messen von Leistung, die von dem mindestens einen zweiten UE empfangen wird, basierend auf einem Leistungsschwellenwert, einer Durchschnittsleistung oder einer Verteilung der gemessenen Leistung, um einen Standort des mindestens einen zweiten UE zu identifizieren.

6. Verfahren nach Anspruch 1, wobei:
Bestimmen von mindestens einem der mehreren Ressourcenpools das Bestimmen eines einzelnen Ressourcenpools umfasst, um die mehreren Nachrichten an das mindestens eine zweite UE zu übertragen,
wobei der einzelne Ressourcenpool für Datenressourcen für periodischen und ereignisbedingten Verkehr gemeinsam genutzt wird, Ressourcenpools jedoch für Steuerressourcen für den periodischen und ereignisbedingten Verkehr getrennt sind.

7. Verfahren nach Anspruch 1, wobei:
Bestimmen von mindestens einem der mehreren Ressourcenpools das Bestimmen eines einzelnen Ressourcenpools umfasst, um die mehreren Nachrichten an das mindestens eine zweite UE zu übertragen, und
der einzelne Ressourcenpool für die Steuerungs- und Datennachrichten semistatisch partitioniert ist.

8. Verfahren nach Anspruch 1, wobei der Verkehr des ersten Typs ein periodischer Verkehr oder ein aperiodischer Verkehr ist und der Verkehr des zweiten Typs der andere aus dem periodischen Verkehr und dem aperiodischen Verkehr ist.

9. Verfahren nach Anspruch 8, das ferner Folgendes umfasst:
Übertragen der mehreren Nachrichten an das mindestens eine zweite UE, wobei der gemeinsam genutzte Ressourcenpool für den periodischen Verkehr oder den aperiodischen Verkehr semistatisch partitioniert ist,
wobei der aperiodische Verkehr periodische Verkehrsressourcen in dem gemeinsam genutzten Ressourcenpool ohne eine Strafe verwenden darf, wenn keine aperiodischen Verkehrsressourcen verfügbar sind, während der periodische Verkehr für die Verwendung der aperiodischen Verkehrsressourcen in dem gemeinsam genutzten Ressourcenpool bestraft wird.

10. Verfahren nach Anspruch 1, wobei der Verkehr des ersten Typs Verkehr für den Modus 1-Betrieb ist und der Verkehr des zweiten Typs Verkehr für den Modus 2-Betrieb ist.

11. Verfahren nach Anspruch 1, wobei die Ressourcen gemäß den Partitionsinformationen partitioniert sind, und
wobei die Partitionsinformationen durch einen Evolved Node B, eNB, konfiguriert werden.

12. Benutzergerät, UE (UE_1), eingerichtet zum Implementieren eines der Verfahren nach den Ansprüchen 1 bis 11.

## Revendications

1. Procédé pour faire fonctionner un premier équipement d'utilisateur, UE (UE_1), dans un réseau de communication véhiculaire sans fil, le procédé comprenant :
déterminer (2613) au moins l'un de groupes de ressources multiples comprenant des ressources de temps et de fréquence pour transmettre une pluralité de messages incluant des messages de commande et de données à au moins un deuxième UE (UE_2),
où la pluralité de messages comprennent un trafic apériodique déclenché par un événement ou un trafic périodique et l'au moins un des groupes de ressources multiples comprend un groupe de ressources partagées, et où de multiples types de trafic ou de priorités sont multiplexés dans l'au moins un des groupes de ressources multiples ;
ajuster dynamiquement une sélection de ressources dans les groupes de ressources multiples sur la base de critères de sélection de ressources ; et
communiquer directement (2614) la pluralité de messages à l'au moins un deuxième UE en utilisant l'au moins un des groupes de ressources multiples,
où la communication directe de la pluralité de messages à l'au moins un deuxième UE en utilisant l'au moins un des groupes de ressources multiples comprend :
identifier des ressources dans le groupe de ressources partagées, les ressources comprenant un premier ensemble de ressources pour le trafic d'un premier type et un deuxième ensemble de ressources pour le trafic d'un deuxième type ;
déterminer au moins une ressource pour transmettre le trafic de premier type parmi le premier ensemble de ressources selon un ordre de priorité des ressources dans le groupe de ressources partagées ; et
si le premier ensemble de ressources n'est pas disponible dans le groupe de ressources partagées, déterminer au moins une ressource additionnelle pour transmettre le trafic de premier type parmi le deuxième ensemble de ressources selon l'ordre de priorité des ressources dans le groupe de ressources partagées,
où les deux types de trafic sont un trafic apériodique déclenché par un événement et un trafic périodique.

2. Procédé selon la revendication 1, où les ressources sont partagées entre des réseaux de communication de véhicule à véhicule, V2V, et de dispositif à dispositif, D2D.

3. Procédé selon la revendication 1, comprenant en outre l'application d'une attribution différente de domaine de temps et de fréquence, d'une puissance de transmission et de seuils de détection aux multiples types de trafic ou priorités multiplexés dans l'au moins un des groupes de ressources multiples.

4. Procédé selon la revendication 1, où l'au moins un des groupes de ressources multiples est sélectionné sur la base des critères de sélection de ressources qui comprennent au moins l'un parmi des informations de localisation géographique de l'au moins un deuxième UE, une taille de groupe de ressources, une vitesse de véhicule ou un type de trafic incluant un trafic périodique et un trafic apériodique.

5. Procédé selon la revendication 1, comprenant en outre la mesure de la puissance reçue à partir de l'au moins un deuxième UE sur la base d'au moins l'un parmi un seuil de puissance, une puissance moyenne ou une distribution de la puissance mesurée pour identifier une localisation de l'au moins un deuxième UE.

6. Procédé selon la revendication 1, où :
la détermination d'au moins un des groupes de ressources multiples comprend la détermination d'un seul groupe de ressources pour transmettre la pluralité de messages à l'au moins un deuxième UE,
où le seul groupe de ressources est partagé pour des ressources de données pour un trafic périodique et un trafic déclenché par un événement mais des groupes de ressources sont séparés pour des ressources de commande pour le trafic périodique et pour le trafic déclenché par un événement.

7. Procédé selon la revendication 1, où :
la détermination d'au moins un des groupes de ressources multiples comprend la détermination d'un seul groupe de ressources pour transmettre la pluralité de messages à l'au moins un deuxième UE, et
le seul groupe de ressources est partitionné de manière semi-statique pour les messages de commande et de données.

8. Procédé selon la revendication 1, où le trafic de premier type est l'un parmi un trafic périodique et un trafic apériodique et le trafic de deuxième type est l'autre parmi le trafic périodique et le trafic apériodique.

9. Procédé selon la revendication 8, comprenant en outre :
transmettre la pluralité de messages à l'au moins un deuxième UE, le groupe de ressources partagées étant partitionné de manière semi-statique pour le trafic périodique ou le trafic apériodique,
où le trafic apériodique est autorisé à utiliser des ressources de trafic périodique dans le groupe de ressources partagées sans pénalité s'il n'y a pas de ressources de trafic apériodique disponibles alors que le trafic périodique est pénalisé pour l'utilisation des ressources de trafic apériodique dans le groupe de ressources partagées.

10. Procédé selon la revendication 1, où le trafic de premier type est le trafic pour le fonctionnement en mode 1 et le trafic de deuxième type est le trafic pour le fonctionnement en mode 2.

11. Procédé selon la revendication 1, où les ressources sont partitionnées en fonction des informations de partitionnement, et
où les informations de partitionnement sont configurées par un nœud B évolué, eNB.

12. Équipement d'utilisateur, UE (UE_1), conçu pour mettre en œuvre l'un des procédés des revendications 1 à 11.
